# EUROPEAN PATENT APPLICATION

(11) **EP 1 631 084 A2**
(43) Date of publication of application: **01.03.2006**
(21) Application number: 05017766.6
(22) Date of filing: 16.08.2005
(51) Int. Cl.: H04N 7/14

(54) **Communication terminal apparatus, television telephone control method, and television telephone control program**

(30) Priority: 30.08.2004 JP 2004250012
(71) Applicant: NEC CORPORATION, Tokyo (JP)
(72) Inventor: Yoshimura, Shigehiro, Tokyo (JP)
(74) Representative: Vossius & Partner

(57) **Abstract**

When communication is started using television telephones, a communication terminal apparatus performs communication with a communication partner with the privacy of a caller protected. When a call is established with the terminal apparatus of the communication partner, a captured image captured by capture device is displayed as a mirror image on a display unit, audio information received from the terminal apparatus of the communication partner is output as voice, and the image stored in the storage unit of a communication terminal apparatus is transmitted as an image for protection of the privacy of the caller to the terminal apparatus of the communication partner together with the audio information.

## Description

The present invention relates to a communication terminal apparatus having the function of a television telephone capable of transmitting and receiving an image together with voice, and more specifically to a communication terminal apparatus, a television telephone control method, and a television telephone control program for controlling communications using television telephones.

Recently, a mobile communication terminal apparatus represented by a mobile telephone, a PHS, etc. has made remarkable progress in performance and function loaded into the communication terminal apparatus, and a communication terminal apparatus having the function of a television telephone capable of transmitting and receiving an image together with voice in addition to the basic function of communication by voice has been marketed. Using the function of a television telephone loaded into the communication terminal apparatus, communication by voice can be performed while seeing the images of a communication partner, thereby improving the quality of the communication with the communication partner.

Using the function of a television telephone loaded into a communication terminal apparatus, image data captured by a camera is automatically transmitted to the terminal device of a communication partner when a call to the terminal device of the communication partner is established.

For example, a predetermined operation is performed using an operation unit of the communication terminal apparatus, and a call to the terminal device of a communication partner is requested using television telephones. When the requested call to the terminal device of the communication partner is established, the data of an image captured by the camera of the communication terminal apparatus is automatically transmitted to the terminal device of the communication partner of the requested call. When a call with the terminal device of the partner of the requested call is established in response to the call request from the terminal device of the communication partner using television telephones, the data of the image captured by a camera is automatically transmitted to the terminal device of the communication partner of the requested call.

Thus, when a call is established with a terminal device of a communication partner using television telephones, the data of an image captured by a camera is automatically transmitted to the terminal device of a communication partner. Therefore, in the communication terminal apparatus having the above-mentioned function of a television telephone performs communication, image data to be transmitted to the terminal device of a communication partner cannot be confirmed before a call is established.

As a result, when a call request using television telephones is accepted, the picture of a caller at the time when a call is established using television telephones is transmitted to the terminal device of a communication partner although the caller does not request to transmit the image of the caller to the terminal device of the communication partner, thereby transmitting an undesired picture of the caller to the terminal device of the communication partner.

To solve the above-mentioned problem, a technical document filed prior to the present invention discloses a television telephone apparatus including record means for recording in advance an image substitute for a raw captured image, capture means for capturing a subject, directive input means for accepting a directive from a user to transmit a captured image or to transmit a substitute image recorded in advance, image selection means for selecting an image transmitted from the capture means when the directive input means directs to transmit a captured image, and for selecting a substitute image when the directive input means directs to transmit a substitute image recorded in advance, and transmission means for transmitting an image selected by the image selection means. The apparatus maintains the merit as a television telephone apparatus, and can suppress transmitting the current image of a caller when the caller does not request to transmit the current image (for example, refer to JP-A-2001-69473 (patent document 1)).

There is a telephone which can select and electrically transmit a signal of an image captured by a camera unit or an image signal stored in advance in image storage means, and can be easily operated (for example, refer to JP-A-2003-258956 (patent document 2)).

There is also a telephone having video signal transmission means for capturing an image of a user by a capture unit and transmitting the video signal to a partner through a telephone circuit, and image signal reception means for receiving a video signal of the partner transmitted through the telephone circuit and displaying a picture on a display unit, and including first storage means for storing a video signal from the capture unit in advance as a video signal to be transmitted to a partner through a telephone circuit, second storage means for storing a video signal of a partner as a video signal to be transmitted to a partner through a telephone circuit, and selection means for selecting one of the video signal stored by the first storage means, the video signal stored by the second storage means, and the video signal captured by the capture unit, and transmitting the selected signal to a telephone circuit. With the configuration, the telephone can select an initial image transmitted to a telephone circuit when communication is started (for example, refer to JP-A-4-230190 (patent document 3)).

There is a television telephone apparatus which transmits a substitute image set in advance to a partner when it is in a state of not transmitting an image although the image is taken by a camera (non-image-transmission state) to prevent an image of a caller from being carelessly displayed and output on a display of a receiver, displays the image taken by the camera on the screen of the apparatus of the caller, and checks the status by an operator (for example, refer to JP-A-10-98702 (patent document 4)).

There is also a television telephone apparatus which selects corresponding image arrangement information for a communication partner, and configures and displays image information about a communication partner, own image information, and character information on a display screen according to the selected image arrangement information, thereby generating a desired screen depending on a communication partner when establishing communication using the television telephone apparatus (for example, JP-A-2004-120344 (patent document 5)).

The above-mentioned patent documents 1 to 3 describe communication using television telephones without transmitting the picture of the current state of a caller to the terminal device of a communication partner by storing image data in a communication terminal apparatus in advance and transmitting the image data stored in the terminal device in advance to the terminal device of a communication partner when a caller does not transmit the current picture of the caller. The patent document 4 transmits a substitute image set in advance to a partner to prevent an image of a caller from being carelessly displayed and output on a display of a receiver, displays the image taken by the camera on the screen of the apparatus of the caller, and checks the status by an operator.

However, the above listed patent documents 1 to 3 transmit image data stored in a terminal device in advance to the terminal device of a communication partner, thereby stopping the necessity to transmit the current picture of the caller using television telephones. At this time, grasping the picture of the caller on the display unit is not considered. The above-mentioned patent document 4 allows the operator to display the image of the caller captured by a camera on the screen of the apparatus of the caller and grasp the state of the image, but does not refer to the display style or control process of the image of the caller displayed on the screen of the apparatus of the caller.

The above-mentioned patent document 5 can configure a desired screen depending on the communication partner by configuring and displaying the image information about a communication partner, the caller image information, and character information on the display screen, but does not consider the protection of the privacy of communication parties.

The present invention has been developed to solve the above-mentioned problems and aims at providing a communication terminal apparatus, a television telephone control method, and a television telephone control program capable of protecting the privacy of a caller when communication using television telephones is started without attenuating the features of a television telephone, and establishing communication with a communication partner.

To attain the objectives of the present invention, the present invention has the following characteristics.

The communication terminal apparatus according to the present invention has: a capture means for capturing a caller; means for transmitting a captured image together with audio information to a terminal device of a communication partner; and means for receiving a captured image and audio information from the terminal device of the communication partner, displaying the received captured image on a display unit, and outputting the received audio information as voice, and comprises: storage means for storing a predetermined image information; and first control means for displaying the captured image captured by the capture means as a mirror image on the display unit when a call to the terminal device of the communication partner is established, outputting the audio information received from the terminal device of the communication partner as voice, and transmitting the image information stored in the storage means together with the audio information to the terminal device of the communication partner.

The communication terminal apparatus according to the present invention comprises second control means for displaying on the display unit the captured image received from the terminal device of the communication partner instead of the captured image captured by the capture means, outputting the audio information received from the terminal device of the communication partner as voice, and transmitting the captured image captured by the capture means together with audio information to the terminal device of the communication partner.

The communication terminal apparatus according to the present invention comprises third control means for displaying on the display unit the captured image received from the terminal device of the communication partner instead of the captured image captured by the capture means, outputting the audio information received from the terminal device of the communication partner as voice, and transmitting the image information stored in the storage means together with audio information to the terminal device of the communication partner.

The communication terminal apparatus according to the present invention has: a capture means for capturing a caller; means for transmitting a captured image together with audio information to a terminal device of a communication partner; and means for receiving a captured image and audio information from the terminal device of the communication partner, displaying the received captured image on a display unit, and outputting the received audio information as voice, and comprises: first control means for displaying the captured image captured by the capture means as a mirror image on the display unit when a call to the terminal device of the communication partner is established, performing image processing for protection of privacy of a caller on the captured image captured by the capture means, and transmitting the captured image treated by the image processing together with audio information to the terminal device of the communication partner.

The communication terminal apparatus according to the present invention comprises second control means for displaying on the display unit the captured image received from the terminal device of the communication partner instead of the captured image captured by the capture means, and transmitting the captured image captured by the capture means to the terminal device of the communication partner.

The communication terminal apparatus according to the present invention comprises third control means for displaying on the display unit the captured image received from the terminal device of the communication partner instead of the captured image captured by the capture means, performing image processing for protection of privacy of a caller on the captured image captured by the capture means, and transmitting the captured image treated by the image processing together with audio information to the terminal device of the communication partner.

The communication terminal apparatus according to the present invention has: first capture means for capturing a caller; means for transmitting a captured image together with audio information to a terminal device of a communication partner; and means for receiving a captured image and audio information from the terminal device of the communication partner, displaying the received captured image on a display unit, and outputting the received audio information as voice, and comprises: second capture means for capturing what is other than a caller; and first control means for displaying the captured image captured by the first capture means as a mirror image on the display unit when a call to the terminal device of the communication partner is established, forming an image for protection of privacy of a caller using the captured image captured by second capture means, and transmitting the formed image together with audio information to the terminal device of the communication partner.

The communication terminal apparatus according to the present invention comprises second control means for displaying on the display unit the captured image received from the terminal device of the communication partner instead of the captured image captured by the first capture means, and transmitting the captured image captured by the first capture means to the terminal device of the communication partner.

The communication terminal apparatus according to the present invention comprises third control means for displaying on the display unit the captured image received from the terminal device of the communication partner instead of the captured image captured by the first capture means, forming an image for protection of privacy of a caller using the captured image captured by the second capture means, and transmitting the formed image together with audio information to the terminal device of the communication partner.

The communication terminal apparatus according to the present invention comprises switch means for making a switch to operate one of the first control means, the second control means, and the third control means.

In the communication terminal apparatus according to the present invention, the switch means makes a switch to operate one of the first control means, the second control means, and the third control means when a call to the terminal device of the communication partner is established.

In the communication terminal apparatus according to the present invention, the switch means makes a switch to operate one of the first control means, the second control means and the third control means by an optional operation from an operation unit of the communication terminal apparatus after a call to the terminal device of the communication partner is established and one of the first control means, the second control means, and the third control means is operated.

The communication terminal apparatus according to the present invention comprises automatic switch means for automatically making a switch to operate the second control means when it is determined that a predetermined time has passed after a call to the terminal device of the communication partner is established and the first control means is operated.

In the communication terminal apparatus according to the present invention, image information stored in the storage means is substitute image data as a substitute for a caller and presentation information indicating that the substitute image data is transmitted; and the first control means reads the substitute image data and the presentation information stored in the storage means, overlaps and composes the read substitute image data and presentation information, and transmits the composed composite image information.

In the communication terminal apparatus according to the present invention, the image information stored in the storage means is composite image information obtained by overlapping and composing substitute image data as a substitute for a caller and presentation information indicating that the substitute image data is transmitted; and the first control means reads the composite image information stored in the storage means, and transmits the read composite image information.

The communication terminal apparatus according to the present invention comprises display means for displaying an image to be transmitted to a terminal of the communication partner on a part of the display unit.

The television telephone control method according to the present invention is used by the communication terminal apparatus performing a step of capturing a caller using capture device and transmitting a captured image together with audio information to a terminal device of a communication partner, and a step of receiving a captured image and audio information from the terminal device of the communication partner, displaying the received captured image on a display unit, and outputting the received audio information as voice. With the configuration, the communication terminal apparatus performs a first control step of displaying the captured image captured by the capture means as a mirror image on the display unit when a call to the terminal device of the communication partner is established, outputting the audio information received from the terminal device of the communication partner as voice, and transmitting the image information stored in a storage unit of the communication terminal apparatus together with the audio information to the terminal device of the communication partner.

In the television telephone control method according to the present invention, the communication terminal apparatus performs a second control step of displaying on the display unit the captured image received from the terminal device of the communication partner instead of the captured image captured by the capture device, outputting the audio information received from the terminal device of the communication partner as voice, and transmitting the captured image captured by the capture means together with audio information to the terminal device of the communication partner.

In the television telephone control method according to the present invention, the communication terminal apparatus performs a third control step of displaying on the display unit the captured image received from the terminal device of the communication partner instead of the captured image captured by the capture means, outputting the audio information received from the terminal device of the communication partner as voice, and transmitting the image information stored in a storage unit of the communication terminal apparatus together with audio information to the terminal device of the communication partner.

The television telephone control method according to the present invention is used by a communication terminal apparatus performing a step of capturing a caller using capture device and transmitting a captured image together with audio information to a terminal device of a communication partner, and a step of receiving a captured image and audio information from the terminal device of the communication partner, displaying the received captured image on a display unit, and outputting the received audio information as voice. With the configuration, the communication terminal apparatus performs a first control step of displaying the captured image captured by the capture device as a mirror image on the display unit when a call to the terminal device of the communication partner is established, performing image processing for protection of privacy of a caller on the captured image captured by the capture means, and transmitting the captured image treated by the image processing together with audio information to the terminal device of the communication partner.

In the television telephone control method according to the present invention, the communication terminal apparatus performs a second control step of displaying on the display unit the captured image received from the terminal device of the communication partner instead of the captured image captured by the capture device, and transmitting the captured image captured by the capture device to the terminal device of the communication partner.

In the television telephone control method according to the present invention, the communication terminal apparatus performs a third control step of displaying on the display unit the captured image received from the terminal device of the communication partner instead of the captured image captured by the capture device, performing image processing for protection of privacy of a caller on the captured image captured by the capture device, and transmitting the captured image treated by the image processing together with audio information to the terminal device of the communication partner.

The television telephone control method according to the present invention is used by a communication terminal apparatus performing a step of capturing a caller using first capture device and transmitting a captured image together with audio information to a terminal device of a communication partner, and a step of receiving a captured image and audio information from the terminal device of the communication partner, displaying the received captured image on a display unit, and outputting the received audio information as voice. With the configuration, the communication terminal apparatus performs a first control step of displaying the captured image captured by the first capture device as a mirror image on the display unit when a call to the terminal device of the communication partner is established, forming an image for protection of privacy of a caller using the captured image captured by second capture device for capturing what is other than a caller, and transmitting the formed image together with audio information to the terminal device of the communication partner.

In the television telephone control method according to the present invention, the communication terminal apparatus performs a second control step of displaying on the display unit the captured image received from the terminal device of the communication partner instead of the captured image captured by the first capture device, and transmitting the captured image captured by the first capture device to the terminal device of the communication partner.

In the television telephone control method according to the present invention, the communication terminal apparatus performs a third control step of displaying on the display unit the captured image received from the terminal device of the communication partner instead of the captured image captured by the first capture device, forming an image for protection of privacy of a caller using the captured image captured by the second capture device, and transmitting the formed image together with audio information to the terminal device of the communication partner.

In the television telephone control method according to the present invention, the communication terminal apparatus performs a switch step of making a switch to perform one of the first control step, the second control step, and the third control step.

In the television telephone control method according to the present invention, the switch step makes a switch to allow the communication terminal apparatus to perform one of the first control step, the second control step, and the third control step when a call to the terminal device of the communication partner is established.

In the television telephone control method according to the present invention, the switch means makes a switch to allow the communication terminal apparatus to perform one of the first control step, the second control step and the third control step by an optional operation from an operation unit of the communication terminal apparatus after a call to the terminal device of the communication partner is established and one of the first control step, the second control step, and the third control step is performed.

In the television telephone control method according to the present invention, the communication terminal apparatus performs an automatic switch step of automatically making a switch to perform the second control step when it is determined that a predetermined time has passed after a call to the terminal device of the communication partner is established and the first control step is performed.

In the television telephone control method according to the present invention, image information stored in the storage unit is substitute image data as a substitute for a caller and presentation information indicating that the substitute image data is transmitted; and the first control step reads the substitute image data and the presentation information stored in the storage unit, overlaps and composes the read substitute image data and presentation information, and transmits the composed composite image information.

In the television telephone control method according to the present invention, the image information stored in the storage unit is composite image information obtained by overlapping and composing substitute image data as a substitute for a caller and presentation information indicating that the substitute image data is transmitted; and the first control step reads the composite image information stored in the storage means, and transmits the read composite image information.

In the television telephone control method according to the present invention, the communication terminal apparatus performs a display step of displaying an image to be transmitted to a terminal of the communication partner on a part of the display unit.

The television telephone control program according to the present invention is used to direct a communication terminal apparatus to perform a process of capturing a caller using capture device and transmitting a captured image together with audio information to a terminal device of a communication partner, and a process of receiving a captured image and audio information from the terminal device of the communication partner, displaying the received captured image on a display unit, and outputting the received audio information as voice. Using the program, the communication terminal apparatus performs a first control step of displaying the captured image captured by the capture device as a mirror image on the display unit when a call to the terminal device of the communication partner is established, outputting the audio information received from the terminal device of the communication partner as voice, and transmitting the image information stored in a storage unit of the communication terminal apparatus together with the audio information to the terminal device of the communication partner.

Using the television telephone control program according to the present invention, the communication terminal apparatus performs a second control process of displaying on the display unit the captured image received from the terminal device of the communication partner instead of the captured image captured by the capture device, outputting the audio information received from the terminal device of the communication partner as voice, and transmitting the captured image captured by the capture device together with audio information to the terminal device of the communication partner.

Using the television telephone control program according to the present invention, the communication terminal apparatus performs a third control process of displaying on the display unit the captured image received from the terminal device of the communication partner instead of the captured image captured by the capture device, outputting the audio information received from the terminal device of the communication partner as voice, and transmitting the image information stored in a storage unit of the communication terminal apparatus together with audio information to the terminal device of the communication partner.

The television telephone control program according to the present invention is used to direct a communication terminal apparatus to perform a process of capturing a caller using capture device and transmitting a captured image together with audio information to a terminal device of a communication partner, and a process of receiving a captured image and audio information from the terminal device of the communication partner, displaying the received captured image on a display unit, and outputting the received audio information as voice. Using the program, the communication terminal apparatus performs a first control process of displaying the captured image captured by the capture device as a mirror image on the display unit when a call to the terminal device of the communication partner is established, performing image processing for protection of privacy of a caller on the captured image captured by the capture device, and transmitting the captured image treated by the image processing together with audio information to the terminal device of the communication partner.

Using the television telephone control program according to the present invention, the communication terminal apparatus performs a second control process of displaying on the display unit the captured image received from the terminal device of the communication partner instead of the captured image captured by the capture device, and transmitting the captured image captured by the capture device to the terminal device of the communication partner.

Using the television telephone control program according to the present invention, the communication terminal apparatus performs a third control step of displaying on the display unit the captured image received from the terminal device of the communication partner instead of the captured image captured by the capture device, performing image processing for protection of privacy of a caller on the captured image captured by the capture device, and transmitting the captured image treated by the image processing together with audio information to the terminal device of the communication partner.

The television telephone control program according to the present invention is used to direct a communication terminal apparatus to perform a process of capturing a caller using first capture device and transmitting a captured image together with audio information to a terminal device of a communication partner, and a process of receiving a captured image and audio information from the terminal device of the communication partner, displaying the received captured image on a display unit, and outputting the received audio information as voice. Using the program, the communication terminal apparatus performs a first control process of displaying the captured image captured by the first capture device as a mirror image on the display unit when a call to the terminal device of the communication partner is established, forming an image for protection of privacy of a caller using the captured image captured by second capture device for capturing what is other than a caller, and transmitting the formed image together with audio information to the terminal device of the communication partner.

Using the television telephone control program according to the present invention, the communication terminal apparatus performs a second control process of displaying on the display unit the captured image received from the terminal device of the communication partner instead of the captured image captured by the first capture device, and transmitting the captured image captured by the first capture device to the terminal device of the communication partner.

Using the television telephone control program according to the present invention, the communication terminal apparatus performs a third control step of displaying on the display unit the captured image received from the terminal device of the communication partner instead of the captured image captured by the first capture device, forming an image for protection of privacy of a caller using the captured image captured by the second capture device, and transmitting the formed image together with audio information to the terminal device of the communication partner.

Using the television telephone control program according to the present invention, the communication terminal apparatus performs a switch process of making a switch to perform one of the first control process, the second control process, and the third control process.

Using the television telephone control program according to the present invention, the switch process makes a switch to allow the communication terminal apparatus to perform one of the first control process, the second control process, and the third control process when a call to the terminal device of the communication partner is established.

Using the television telephone control program according to the present invention, the switch process makes a switch to allow the communication terminal apparatus to perform one of the first control process, the second control process and the third control process by an optional operation from an operation unit of the communication terminal apparatus after a call to the terminal device of the communication partner is established and one of the first control process, the second control process, and the third control process is performed.

Using the television telephone control program according to the present invention, the communication terminal apparatus performs an automatic switch process of automatically making a switch to perform the second control process when it is determined that a predetermined time has passed after a call to the terminal device of the communication partner is established and the first control process is performed.

In the television telephone control program according to the present invention, image information stored in the storage unit is substitute image data as a substitute for a caller and presentation information indicating that the substitute image data is transmitted; and the first control process reads the substitute image data and the presentation information stored in the storage unit, overlaps and composes the read substitute image data and presentation information, and transmits the combined composite image information.

In the television telephone control program according to the present invention, the image information stored in the storage unit is composite image information obtained by overlapping and composing substitute image data as a substitute for a caller and presentation information indicating that the substitute image data is transmitted; and the first control process reads the composite image information stored in the storage means, and transmits the read composite image information.

Using the television telephone control program according to the present invention, the communication terminal apparatus performs a display process of displaying an image to be transmitted to a terminal of the communication partner on a part of the display unit.

The communication terminal apparatus, the television telephone control method, and the television telephone control program according to the present invention can smoothly perform communications with a communication partner while protecting the privacy of a caller by displaying on a display unit the image of the caller as a mirror image and transmitting to the terminal device of the communication partner the image information for protection of the privacy when a call to the terminal device of the communication partner is established.
The invention will be further described with reference to the drawings.

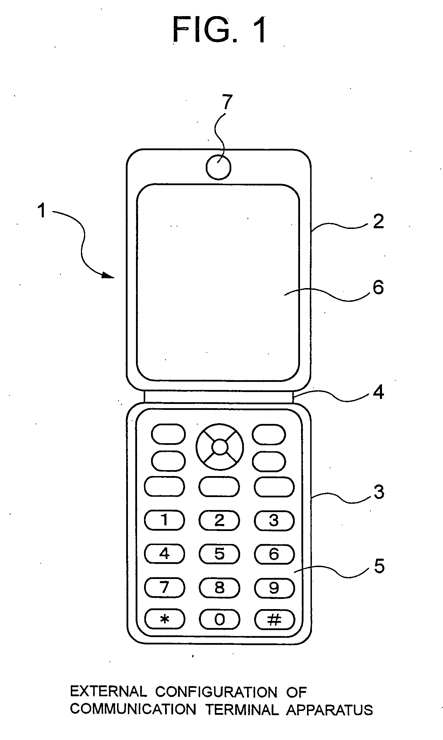

FIG. 1 shows the external configuration of the communication terminal apparatus according to an embodiment of the present invention;

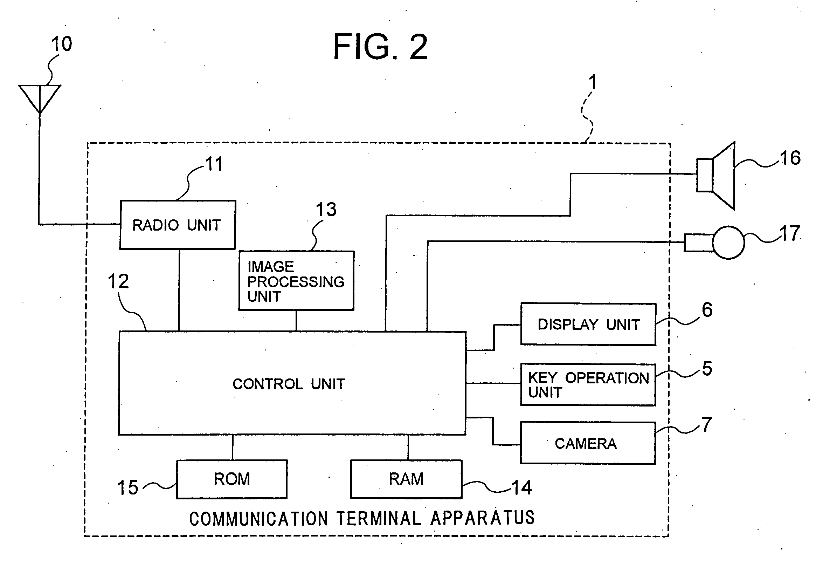

FIG. 2 is a block diagram showing the configuration of the functions of the communication terminal apparatus according to an embodiment of the present invention;

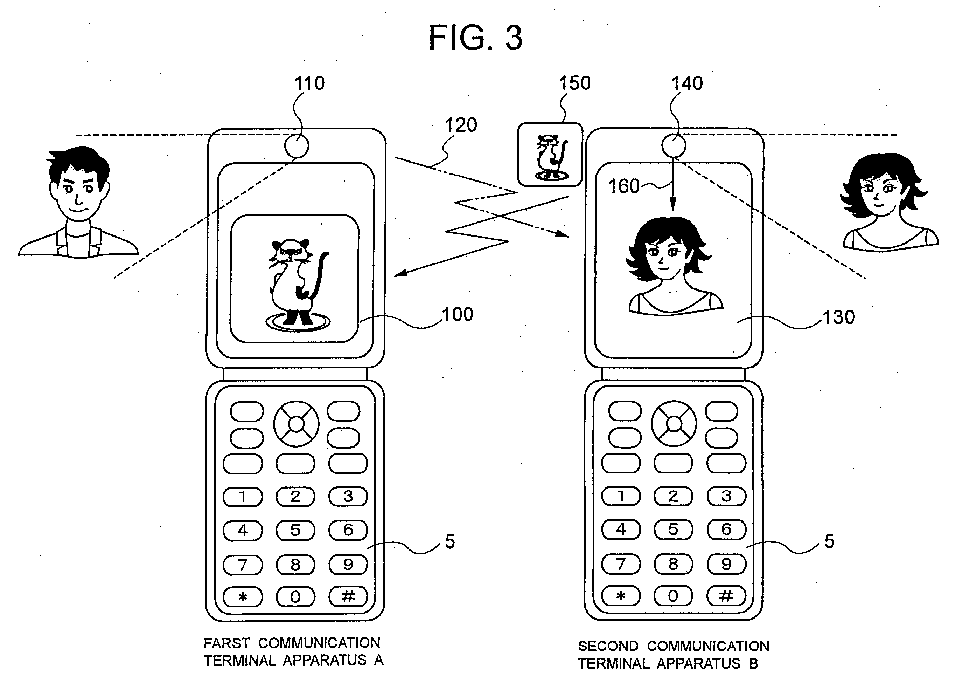

FIG. 3 is an explanatory view showing the functions of the communication terminal apparatus according to an embodiment of the present invention, and shows the state (one-screen configuration) in which a television telephone is used by transmitting a substitute image to the terminal device of a communication partner, and confirming the image of the caller as a mirror image on the display unit of the caller terminal;

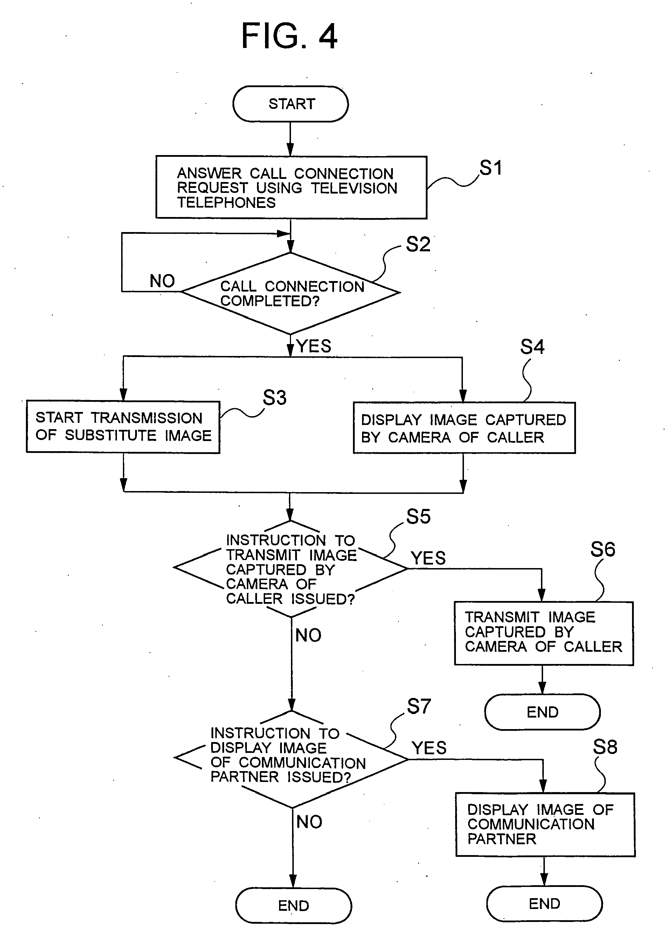

FIG. 4 is a flowchart showing the controlling operation of the communication terminal apparatus according to an embodiment of the present invention showing the processing operation when a television telephone is started by confirming the image of a caller as a mirror image on the display unit of the terminal of the caller, and transmitting a substitute image to the terminal device of a communication partner;

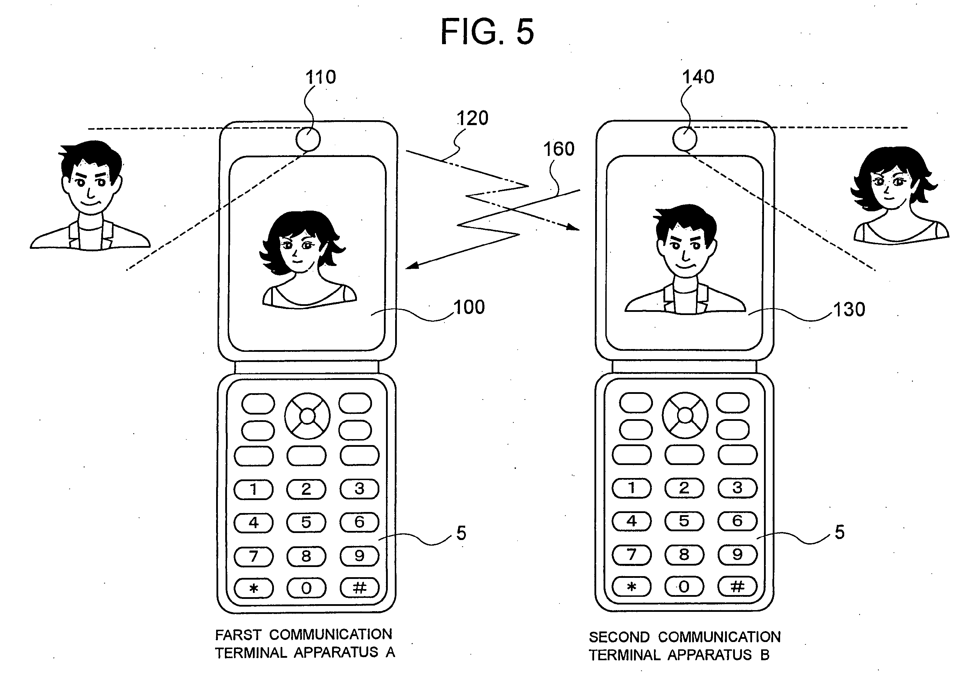

FIG. 5 is an explanatory view showing the functions of the communication terminal apparatus according to an embodiment of the present invention, and shows the state (one-screen configuration) in which a television telephone is used by transmitting the image of a caller to the terminal device of a communication partner, and browsing the image of the communication partner on the display unit of the caller terminal;

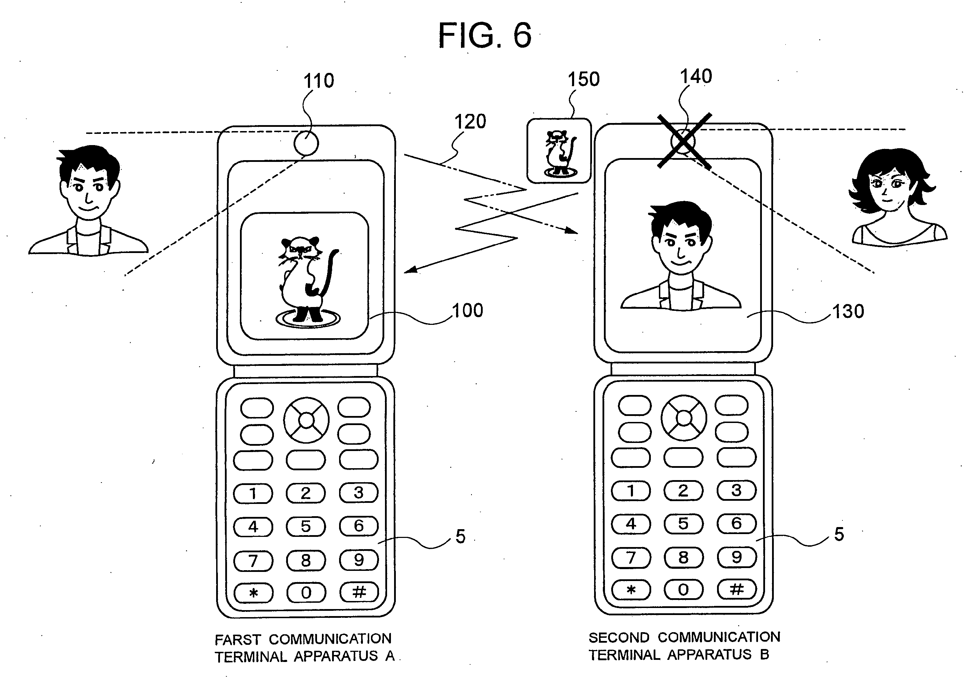

FIG. 6 is an explanatory view showing the functions of the communication terminal apparatus according to an embodiment of the present invention, and shows the state (one-screen configuration) in which a television telephone is used by transmitting a substitute image to the terminal device of a communication partner, and browsing the image of the communication partner on the display unit of the caller terminal;

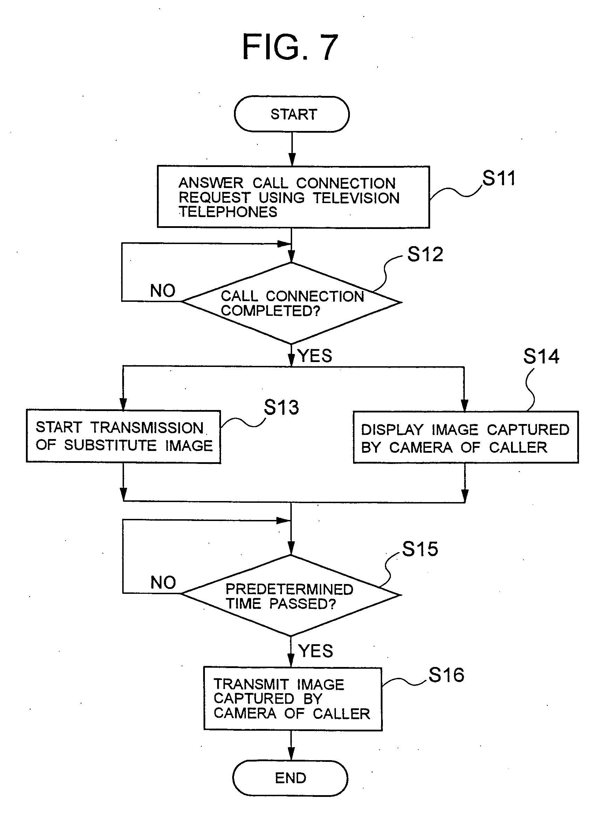

FIG. 7 is a flowchart showing the processing operation performed when a caller transmits an image of the caller captured by a camera of the terminal of the caller to the communication terminal of a communication partner without performing an optional operation;

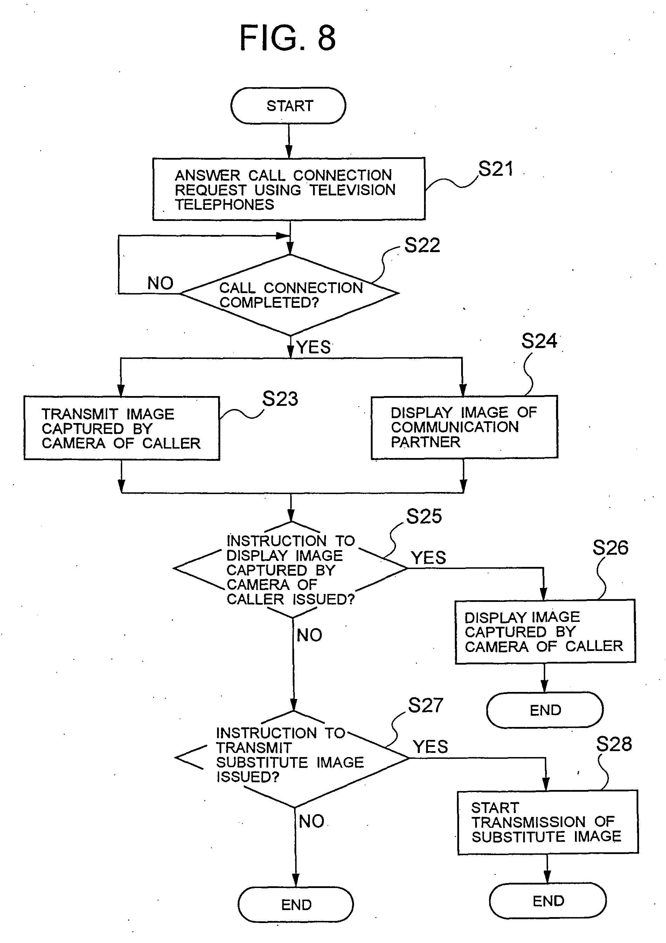

FIG. 8 is a flowchart showing the processing operation of the communication terminal apparatus according to an embodiment of the present invention, and showing the processing operation performed when a television telephone is started by transmitting the image of a caller to the terminal device of a communication partner, and displaying the image of the communication partner on the display unit of the terminal of the caller;

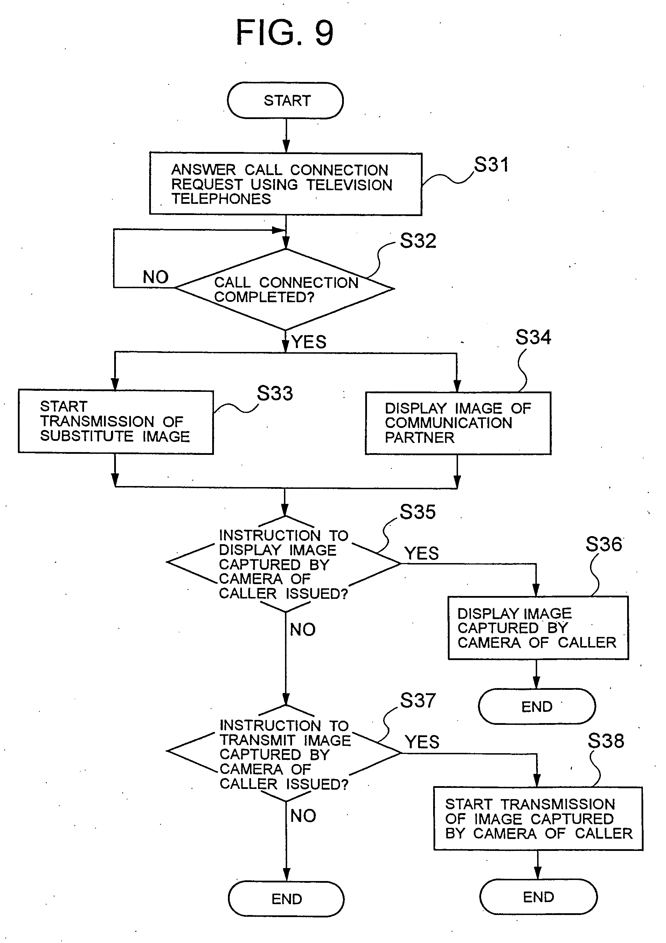

FIG. 9 is a flowchart showing the processing operation of the communication terminal apparatus according to an embodiment of the present invention, and showing the processing operation performed when a television telephone is started by transmitting a substitute image to the terminal device of a communication partner, and displaying the image of the communication partner on the display unit of the terminal of the caller;

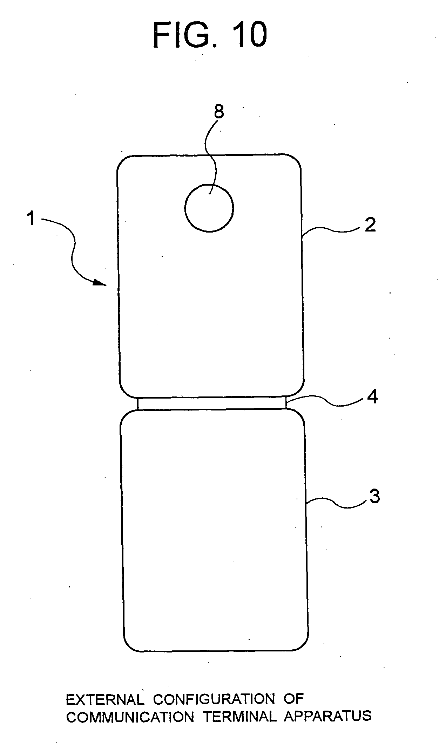

FIG. 10 is a second view showing the external configuration of the communication terminal apparatus according to an embodiment of the present invention;

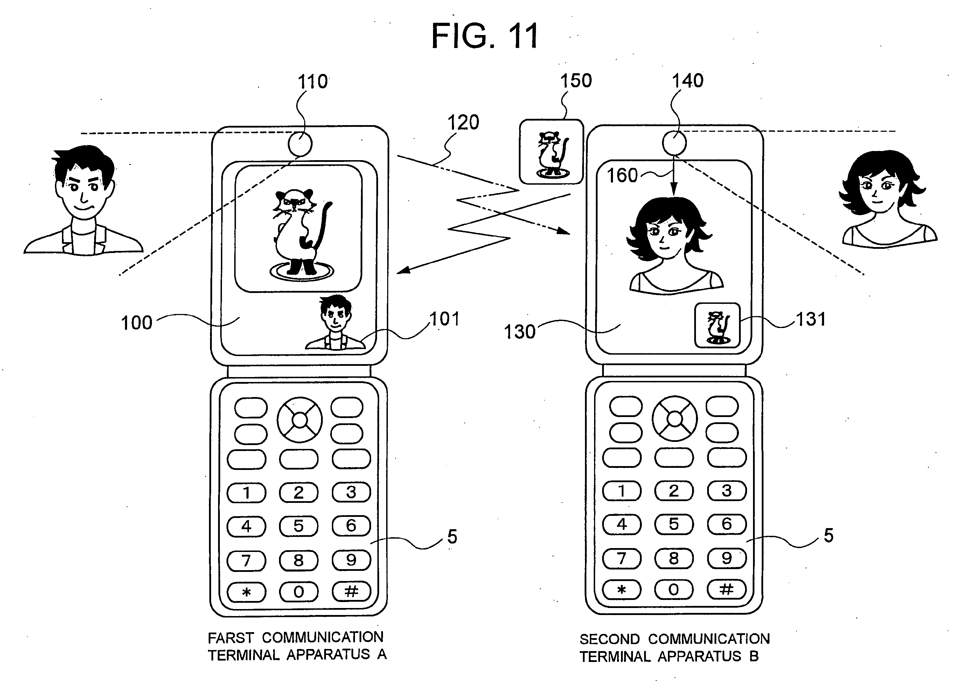

FIG. 11 is an explanatory view showing the functions of the communication terminal apparatus according to the seventh embodiment of the present invention, and shows the state (two-screen configuration) in which a television telephone is used by transmitting a substitute image to the terminal device of a communication partner, and confirming the image of the caller as a mirror image on the display unit of the caller terminal and confirming the substitute image transmitted to the terminal device of the communication partner;

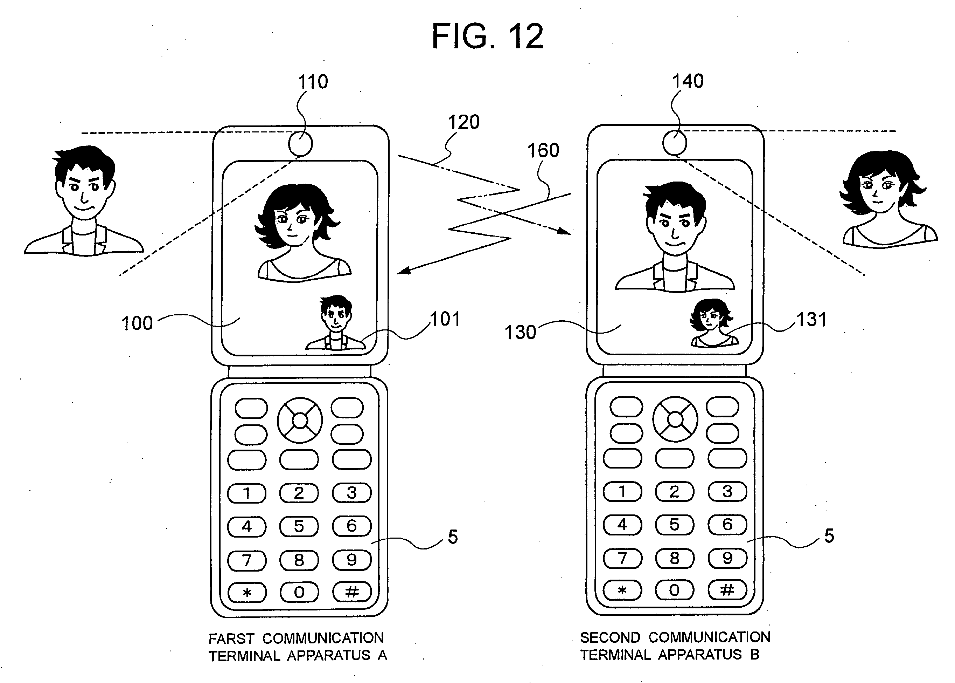

FIG. 12 is an explanatory view showing the functions of the communication terminal apparatus according to the seventh embodiment of the present invention, and shows the state (two-screen configuration) in which a television telephone is used by transmitting the image of a caller to the terminal device of a communication partner, and browsing the image of the communication partner on the display unit of the caller terminal and confirming the image of the caller transmitted to the terminal device of the communication partner;

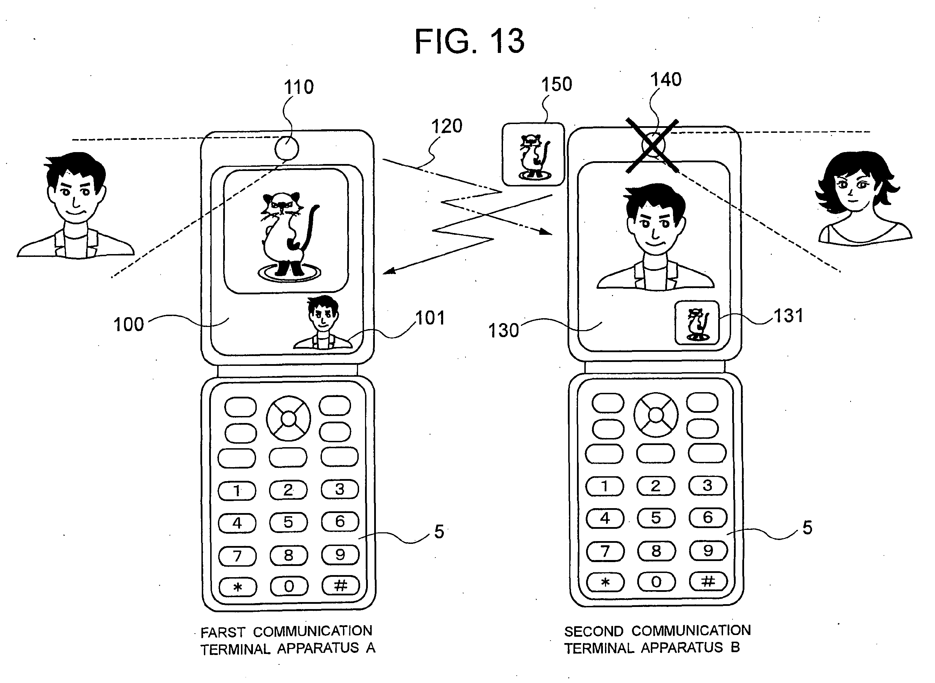

FIG. 13 is an explanatory view showing the functions of the communication terminal apparatus according to seventh embodiment of the present invention, and shows the state (two-screen configuration) in which a television telephone is used by transmitting a substitute image to the terminal device of a communication partner, and browsing the image of the communication partner on the display unit of the caller terminal and confirming the substitute image transmitted to the terminal device of the communication partner; and

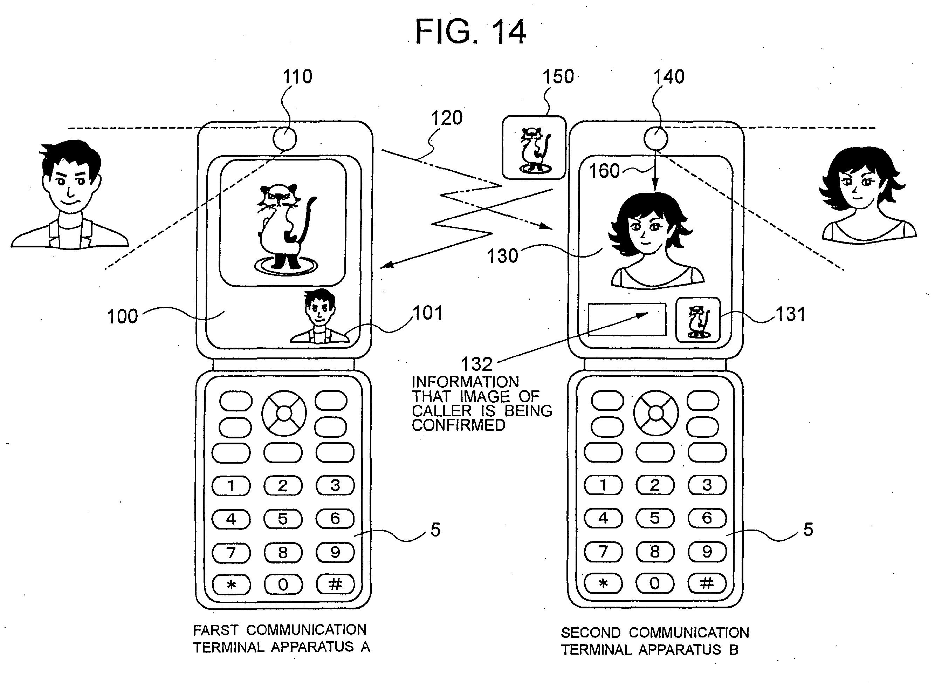

FIG. 14 shows an example of a case in which when image information 160 captured by a camera 140 of the second communication terminal apparatus (B) is displayed as a mirror image on a display unit 130 of the second communication terminal apparatus (B), the information that the caller image 160 is being confirmed is displayed on a part of the display unit 130.

The communication terminal apparatus according to an embodiment of the present invention is explained below by referring to FIGS. 2, 3, 5, and 6.

A communication terminal apparatus B according to an embodiment of the present invention is, as shown in FIG. 5, a communication terminal apparatus B having portion for capturing a caller by capture device 140 and transmitting the captured image 160 together with audio information to a communication partner terminal apparatus A, and portion for receiving a captured image 120 together with the audio information from the communication partner terminal apparatus A, displaying the received captured image 120 on a display unit 130, and outputting the received audio information as voice. A predetermined image is stored in a storage unit (ROM 15 shown in FIG. 2), and when a call to the communication partner terminal apparatus A is established, the captured image 160 captured by the capture device 140 is displayed as a mirror image on the display unit 130 as shown in FIG. 3, the audio information received from the communication partner terminal apparatus A is output as voice, the image stored in the storage unit (ROM 15 shown in FIG. 2) is transmitted together with the audio information as an image 150 for protection of the privacy of the caller to the communication partner terminal apparatus A. Thus, when communication is started using television telephones, the communication with a communication partner can be smoothly performed with the privacy of the caller protected without attenuating the features specific to television telephones.

As shown in FIG. 5, the communication terminal apparatus B according to an embodiment of the present invention can also switch to display the captured image 120 received from the communication partner terminal apparatus A on the display unit 130 instead of the captured image 160 captured by the capture device 140, output the audio information received from the communication partner terminal apparatus A as voice, and transmit the captured image 160 captured by the capture device 140 together with the audio information to the communication partner terminal apparatus A. Furthermore, as shown in FIG. 6, instead of the captured image 160 captured by the capture device 140, the captured image 120 received from the communication partner terminal apparatus A can be displayed on the display unit 130, the audio information received from the communication partner terminal apparatus A can be output as voice, an image stored in the storage unit (the ROM 15 shown in FIG. 2) can switch to be transmitted together with the audio information to the communication partner terminal apparatus A as the image 150 for protection of the privacy of a caller.

Thus, the communication terminal apparatus B according to an embodiment of the present invention can optionally switch between the image information 160 captured by the capture device 140 of the terminal apparatus B of the caller and the substitute image information 150 stored in the terminal apparatus B of the caller by optionally performing the process of switching the image information 160 or 150 to be transmitted to the communication partner terminal apparatus A or the process of switching the image information 160 or 120 to be displayed on the display unit 130 of the terminal apparatus B of the caller so that the information can be transmitted to the communication partner terminal apparatus A, and the image information 160 or 120 to be displayed on the display unit 130 of the terminal apparatus B of the caller can be optionally switched. As the above-mentioned storage unit, the ROM 15 shown in FIG. 2 is used for example, but PROM (programmable ROM) on which information can be rewritten, flash memory, etc. can be used, and any information storage unit what can store information as substitute image information 150 can be used.

### (First Embodiment)

The communication terminal apparatus according to an embodiment of the present invention is explained below by referring to the attached drawings.

First, the configuration of a communication terminal apparatus 1 according to the present embodiment is explained below by referring to FIG. 1. FIG. 1 shows the outline of the communication terminal apparatus 1 according to the present embodiment.

The communication terminal apparatus 1 according to the present embodiment is configured by a first housing 2 and a second housing 3 rotating on a hinge unit 4.

In the communication terminal apparatus 1 according to the present embodiment as shown in FIG. 1, the second housing 3 is provided with a key operation unit 5, and the first housing 2 is provided with a display unit 6 and a camera 7.

The key operation unit 5 performs various operations. The display unit 6 displays various kinds of information. The camera 7 is attached inside the second housing 3 to capture various information, and captures, for example, the image of the caller for use in establishing communication using television telephones.

The configuration of the functions of the communication terminal apparatus 1 shown in FIG. 1 is explained below by referring to FIG. 2. FIG. 2 shows the configuration of the functions according to the present embodiment.

The communication terminal apparatus 1 is configured by a radio antenna 10, a radio unit 11, a control unit 12 an image processing unit 13, the display unit 6, the key operation unit 5, the camera 7, RAM 14, ROM 15, a speaker 16, and a microphone 17. Each functional unit is connected through a control line such as a bus, etc.

### <Radio Antenna 10>

The radio antenna 10 generates a received signal after receiving radio waves from an external communication terminal apparatus, and transmits the generated received signal to the radio unit 11. The radio antenna 10 also receives a transmission signal from the radio unit 11 and transmits it as electric waves to an external communication terminal apparatus.

### <Radio Unit 11>

The radio unit 11 transmits a received signal from the radio antenna 10 to the control unit 12. The radio unit 11 also transmits a transmission signal from the control unit 12 to the radio antenna 10.

### <Control Unit 12>

The control unit 12 separates the received signal from the radio unit 11 into an audio signal and an image signal according to the operation signal from the key operation unit 5, outputs the separated audio signal to the speaker 16, and outputs the separated image signal to the display unit 6. Furthermore, the control unit 12 stores in the RAM 14 the image signal and the audio signal separated after receiving a signal from the radio unit 11 according to the operation signal from the key operation unit 5.

The control unit 12 stores in the RAM 14 the image signal of image data captured by the camera 7 and the audio signal about the audio information obtained through the microphone 17, and stores in the RAM 14 the image signal obtained by performing image processing on the video data captured by the camera 7. For example, the image signal of the video data captured by the camera 7 is temporarily recorded in the RAM (for example, a camera buffer) 14, and the control unit 12 reads an image signal once recorded in the RAM 14, and image processing is performed between the control unit 12 and the image processing unit 13.

The control unit 12 reads an image signal and an audio signal stored in the RAM 14 according to the operation signal from the key operation unit 5, outputs them to the radio unit 11, and transmits them through the radio antenna 10. In addition, according to the operation signal from the key operation unit 5, the image signal stored in the RAM 14 is read and displayed on the display unit 6, and the audio signal stored in the RAM 14 is read and output to the speaker 16.

### <Image Processing Unit 13>

The image processing unit 13 performs image processing (color converting process, resizing process as necessary) on an image signal stored in the RAM 14 and the ROM 15.

### <Display Unit 6>

The display unit 6 displays image data and displays an image according to the image signal from the control unit 12. By loading VRAM (video random access memory) into the display unit 6, the process of displaying image data can be performed at a high speed.

### <Key Operation Unit 5>

The key operation unit 5 selects various functions and operates the function of the mobile terminal apparatus 1, and transmits an operation signal from the key operation unit 5 to the control unit 12.

### <Camera 7>

The camera 7 captures external video data, generates an image signal of video data (static images, moving pictures) captured by the camera 7, and transmits the signal to the control unit 12. The camera 7 shown in FIG. 2 shows the first camera 7 shown in FIG. 1. The size of the image captured by the camera 7 can be a CIF (common intermediate format), a QCIF (quarter common intermediate format), a VGA (video graphics array), a QVGA (quarter video graphics array), etc. These image sizes are just examples, and any image sizes can be applied.

### <RAM 14>

The RAM 14 is a storage unit for temporarily recording the information about an image signal, an audio signal, etc. used in executing a predetermined application program when the program is activated, and functions as a work area in which information is read and written. By applying a device such as a DDR, an RD, etc. of a high access speed, information processing can be performed at a high speed.

### <ROM 15>

The ROM 15 records a control program for controlling the communication terminal apparatus 1, and information such as an application, etc. According to the present embodiment, the ROM 15 records the substitute image data to be transmitted to the communication terminal apparatus of a communication partner, the presentation information to be presented to the terminal device of a communication partner that the substitute image data is being transmitted (information indicating that the substitute image data is being displayed on the display unit of the communication terminal of a communication partner), and the data such as a character font, face parts, a picture character, a character (avatar), etc. for various types of display on the display unit of the communication terminal of a communication partner. The substitute image data is not restricted so far as an image can be displayed on the display unit of a communication partner terminal apparatus, and can be a static image, a moving picture, etc. To establish communication with a communication partner when a television telephone is used, it is desired that a static image, moving pictures, etc. of a caller are used. The moving pictures stored in the ROM 15 refer to storing the moving picture information within a prescribed time. Therefore, when moving picture information within the prescribed time is displayed, the moving picture information is displayed from the beginning when the predetermined time passes (when the moving picture information terminates), or other moving picture information is displayed. In the configuration of the communication terminal apparatus 1 shown in FIG. 2, various kinds of identification are stored in the ROM 15, but the information stored in the ROM 15 can be stored in the PROM (programmable ROM) and flash memory, and various types of information can be rewritten. Thus, a caller can optionally rewrite information using the key operation unit 5 of the communication terminal apparatus 1. The PROM can be EPROM (electrically programmable ROM), EEPROM (electrically erasable programmable ROM), etc. can be used. The flash memory can be NAND flash memory. Information can also be stored in a storage device such as an HDD.

### <Speaker 16>

The speaker 16 outputs an audio signal as voice.

### <Microphone 17>

The microphone 17 obtains external voice as an audio signal.

### (Control Method by the communication terminal apparatus according to the present embodiment when a television telephone is used)

The communication terminal apparatus 1 according to the present embodiment shown in FIG. 2 is explained below by referring to FIGS. 3 to 6. FIG. 3 shows an example of a case in which, when a connecting process using television telephones is completed between communication terminal apparatuses, an image of a caller captured by the camera 7 inside the communication terminal apparatus 1 shown in FIG. 1 is displayed on the display unit 6 as a mirror image, a substitute image for protection of the privacy of the caller is transmitted to the communication terminal of a communication partner, and a communicating process is performed using television telephones. FIG. 4 is a flowchart showing a controlling process using television telephones of the communication terminal apparatus according to the present embodiment. FIGS. 5 and 6 show an example of image information displayed on the display unit of the communication terminal apparatus using television telephones.

The first communication terminal apparatus A issues a call connection request to the second communication terminal apparatus B. In the second communication terminal apparatus B, the control unit 12 of the second communication terminal apparatus B answers the call connection request from the first communication terminal apparatus A (step S1) via a radio antenna 10 and a radio portion 11 and determines whether or not a call connection has been completed using the television telephone between the first communication terminal apparatus A and the second communication terminal apparatus B (step S2) as shown in FIG. 2.

When the control unit 12 determines that a call connection between the first communication terminal apparatus A and the second communication terminal apparatus B has been completed using television telephones (YES in step S2), the process of transmitting a substitute image for protection of the privacy of the caller of the second communication terminal apparatus B is started (step S3), the control unit 12 reads from the ROM 15 the substitute image data and the presentation information (for display on the display unit 100 of the communication partner terminal apparatus A that the substitute image data is being displayed) for presentation to a communication partner that the substitute image data is being transmitted, and overlaps and composes the read image data and the presentation information by the image processing unit 13, thereby generating substitute image information 150. Then, the control unit 12 transmits the generated substitute image information 150 together with the audio information obtained from the microphone 17 to the first communication terminal apparatus A through the radio unit 11 and the radio antenna 10.

Thus, when the call connection is completed between the first communication terminal apparatus A and the second communication terminal apparatus B, the first communication terminal apparatus A receives from the second communication terminal apparatus B the substitute image information 150 together with the audio information, and the first communication terminal apparatus A displays the substitute image information 150 received from the second communication terminal apparatus B on the display unit 100 of the first communication terminal apparatus A.

When the call connection between the first communication terminal apparatus A and the second communication terminal apparatus B is completed using television telephones, the first communication terminal apparatus A transmits to the second communication terminal apparatus B the image information 120 captured by the camera 110 of the first communication terminal apparatus A together with the audio information. Therefore, the second communication terminal apparatus B receives the image information 120 together with the audio information from the first communication terminal apparatus A through the radio antenna 10 and the radio unit 11, but the second communication terminal apparatus B answers the call connection request from the first communication terminal apparatus A using television telephones (step S1). When the second communication terminal apparatus B determines that a call connection has been completed between the first communication terminal apparatus A and the second communication terminal apparatus B using television telephones (YES in step S2), the control unit 12 of the second communication terminal apparatus B erases the image information 120 received from the first communication terminal apparatus A, displays the image information 160 captured by the camera 140 of the second communication terminal apparatus B as a mirror image on the display unit 130 of the second communication terminal apparatus B, and outputs from the speaker 16 the audio information received together with the image information 120 from the first communication terminal apparatus A (step S4).

The displaying process of displaying the image information 160 as a mirror image on a display unit 130 of the second communication terminal apparatus B is not restricted, but any mirror image inverting process can be applied so far as the image information 160 captured by a camera 140 can be displayed on the display unit 130. For example, the configuration of the communication terminal apparatus 1 shown in FIG. 2 is explained below. That is, when an input image captured by the camera 7 is transmitted to the control unit 12, the control unit 12 temporarily stores the transmitted input image in the RAM (for example, a data line buffer) 14, reads the input image from the RAM (for example, a data line buffer) 14 to display the stored input image as a mirror image on the display unit 6, performs a mirror image inverting process, and displays the resultant image on the display unit 6.

As shown in FIG. 3, the second communication terminal apparatus B transmits the substitute image information 150 to the first communication terminal apparatus A, and a caller performs an optional operation to transmit the image information 160 captured by the camera 140 to the first communication terminal apparatus A of a communication partner using the operation unit 5 of the second communication terminal apparatus B with the image information 160 captured by the camera 140 of the second communication terminal apparatus B displayed as an mirror image on the display unit 130 of the second communication terminal apparatus B, thereby allowing the control unit 12 of the second communication terminal apparatus B as shown in FIG. 5 to determine that an instruction to transmit the image information 160 has been issued (YES in step S5), transmit to the first communication terminal apparatus A the image information 160 captured by the camera 140 of the second communication terminal apparatus B together with the audio information obtained from the microphone 17 through the radio unit 11 and the radio antenna 10, display the image information 160 on the display unit 100 of the first communication terminal apparatus A, receive the image information 120 captured by the camera 110 of the first communication terminal apparatus A together with the audio information through the radio antenna 10 and radio unit 11, display the image information 120 received from the first communication terminal apparatus A on the display unit 130 of the second communication terminal apparatus B, and output the audio information received from the first communication terminal apparatus A through the speaker 16 by switching the control of the television telephone (step S6).

Thus, when a call connection is established using television telephones (YES in step S2), the image information 160 captured by the camera 140 of the second communication terminal apparatus B is displayed as a mirror image on the display unit 130 of the second communication terminal apparatus B (step S4), then the caller uses the operation unit 5 of the second communication terminal apparatus B to perform an optional operation to transmit the image information 160 to the first communication terminal apparatus A (YES in step S5), and the image information 160 captured by the camera 140 of the second communication terminal apparatus B is transmitted to the first communication terminal apparatus A (step S6), thereby allowing the caller of the second communication terminal apparatus B to confirm the image 160 of the caller using a mirror image on the display unit 130 of the terminal apparatus B of the caller using television telephones, then to transmit the confirmed image 160 of the caller to the communication partner terminal apparatus A. Thus, the desired image 160 of the caller can be transmitted to the communication partner terminal apparatus A.

Also, the caller performs an optional operation to display the image information 120 transmitted from the first communication terminal apparatus A on the display unit 130 using the operation unit 5 of the second communication terminal apparatus B to allow the control unit 12 of the second communication terminal apparatus B to determine that an instruction to display the image information 120 captured by the camera 110 of the first communication terminal apparatus A has been issued (YES in step S7), and the control unit 12 transmits to the first communication terminal apparatus A the substitute image information 150 together with the audio information through the radio unit 11 and the radio antenna 10 as shown in FIG. 6, displays the substitute image information 150 on the display unit 100 of the first communication terminal apparatus A, receives the image information 120 captured by the camera 110 of the first communication terminal apparatus A together with the audio information through the radio antenna 10 and the radio unit 11, displays the image information 120 received from the first communication terminal apparatus A on the display unit 130 of the second communication terminal apparatus B, and outputs the audio information through the speaker 16 by switching the control of the television telephone (step S8).

As described above, by performing an optional operation to display the image information 120 on the display unit 130 using the operation unit 5 of the second communication terminal apparatus B (YES in step S7), the substitute image information 150 is transmitted to the first communication terminal apparatus A, and the image information 120 received from the first communication terminal apparatus A is displayed on the display unit 130 of the second communication terminal apparatus B (step S8). Thus, when the image information 120 about a communication partner is checked using television telephones, communication can be performed using the television telephone while browsing the image information 120 received from the communication partner terminal apparatus A by performing an optional operation, and the communication can be performed using the television telephone with the privacy of the caller of the second communication terminal apparatus B protected.

In the above-mentioned processing operation, the substitute image information 150 is generated by the control unit 12 reading the substitute image data from the ROM 15 and the presentation information (for indicating that the substitute image data is being displayed on the display unit of the communication partner terminal device) for presentation to the communication partner that the substitute image data is being transmitted, and the image processing unit 13 overlapping and combining the read image data with the presentation information. However, the substitute image information 150 generated by overlapping the substitute image data with the presentation information can be stored in the ROM 15 in advance, and when a call connection using television telephones is completed between the first communication terminal apparatus A and the second communication terminal apparatus B, the control unit 12 of the second communication terminal apparatus B can read the substitute image information 150 from the ROM 15, and transmit the read substitute image information 150 to the first communication terminal apparatus A. Thus, the process performed when the second communication terminal apparatus B transmits the substitute image information 150 to the communication partner terminal apparatus A can be simplified.

Thus, the communication terminal apparatus B according to the present embodiment captures a caller using the camera 140 as shown in FIG. 5, transmits the captured image 160 to the communication partner terminal apparatus A together with audio information, receives the captured image 120 together with audio information from the communication partner terminal apparatus A, displays the received captured image 120 on the display unit 130 of the communication terminal apparatus B, and outputs the received audio information as voice. In the communication terminal apparatus B, when a call to the communication partner terminal apparatus A is established, as shown in FIG. 3, the captured image 160 captured by the camera 140 is displayed as a mirror image on the display unit 130 of the communication terminal apparatus B, the audio information received from the communication partner terminal apparatus A is output as voice, and the image information 150 stored in the storage unit of the communication terminal apparatus B is transmitted to the communication partner terminal apparatus A together with the audio information, thereby transmitting the image information for protection of the privacy of the caller together with the audio information to the communication partner terminal device. Thus, the privacy of the caller can be protected, and the communication with the communication partner can be smoothly performed.

### (Second Embodiment)

Described below is the second embodiment of the present invention.

In the first embodiment, when a call connection using television telephones is completed between the first communication terminal apparatus A and the second communication terminal apparatus B, the second communication terminal apparatus B transmits the substitute image information 150 to the first communication terminal apparatus A as shown in FIG. 3, and displays the image information 160 captured by the camera 140 of the second communication terminal apparatus B as a mirror image on the display unit 130 of second communication terminal apparatus B. Then, the caller performs an optional operation using the operation unit 5 of the second communication terminal apparatus B and transmits the image information 160 captured by the camera 140 of the second communication terminal apparatus B to the communication partner terminal apparatus A. According to the second embodiment, the caller can transmit the image information 160 captured by the camera 140 to the first communication terminal apparatus A of the communication partner without performing an optional operation. The second embodiment is described below by referring to FIG. 7.

First, as in the first embodiment, when a call connection is completed using television telephones between the first communication terminal apparatus A and the second communication terminal apparatus B (YES in step S12), the control unit 12 of the second communication terminal apparatus B (refer to FIG. 2) transmits the substitute image information 150 to the first communication terminal apparatus A as shown in FIG. 3 (step S13), and displays the image information 160 captured by the camera 140 of the second communication terminal apparatus B as a mirror image on the display unit 130 of the second communication terminal apparatus B (step S14).

Next, the control unit 12 determines whether or not a predetermined time (for example, 30 seconds) has passed from the time when the image information 160 is displayed as a mirror image on the display unit 130 of the second communication terminal apparatus B (step S15). If it determines that a predetermined time has passed (YES in step S15), the control unit 12 transmits the image information 160 captured by the camera 140 of the second communication terminal apparatus B as shown in FIG. 5 together with the audio information obtained from the microphone 17 to the first communication terminal apparatus A, displays the image information 160 on the display unit 100 of the first communication terminal apparatus A, receives the image information 120 captured by the camera 110 of the first communication terminal apparatus A together with the audio information, displays the image information 120 received from the first communication terminal apparatus A on the display unit 130 of the second communication terminal apparatus B, and outputs the audio information received from the first communication terminal apparatus A from the speaker 16 by switching the control of the television telephone (step S16).

Thus, when a call connection using television telephones is established (YES in step S12), the image information 160 captured by the camera 140 of the second communication terminal apparatus B is displayed as a mirror image on the display unit 130 of the second communication terminal apparatus B (step S14), and when it is determined that a predetermined time has passed after the image information 160 is displayed on the display unit 130 (YES in step S15), the image information 160 captured by the camera 140 of the second communication terminal apparatus B is transmitted to the first communication terminal apparatus A (step S16), thereby allowing the caller of the second communication terminal apparatus B to once confirm the image 160 of the caller on the display unit 130 of the terminal apparatus B of the caller using a mirror image using television telephones, and then automatically transmit the confirmed image (160) of the caller to the communication partner terminal apparatus A when a predetermined time passes. If an optional operation id performed to transmit the image information 160 captured by the camera 140 to the first communication terminal apparatus A using the operation unit 5 of the second communication terminal apparatus B before a predetermined time passes after the image information 160 is displayed on the display unit 130, then the image information 160 captured by the camera 140 of the second communication terminal apparatus B can be transmitted to the first communication terminal apparatus A. A predetermined time required to automatically transmit the image 160 of the caller after the image is displayed on the display unit 130 of the terminal apparatus B can be optionally changed, and a user desired time can be optionally set from the operation unit 5 of the communication terminal apparatus.

### (Third Embodiment)

Explained below is the third embodiment of the present invention.
in the first embodiment, when a call connection using television telephones is completed between the first communication terminal apparatus A and the second communication terminal apparatus B, the second communication terminal apparatus B transmits the substitute image information 150 to the first communication terminal apparatus A as shown in FIG. 3, and displays the image information 160 captured by the camera 140 of the second communication terminal apparatus B as a mirror image on the display unit 130 of second communication terminal apparatus B. According to the third embodiment, when a call connection is completed using television telephones between the first communication terminal apparatus A and the second communication terminal apparatus B, the second communication terminal apparatus B transmits the image information 160 captured by the camera 140 of the second communication terminal apparatus B to the first communication terminal apparatus A as shown in FIG. 5, displays the image information 160 on the display unit 100 of the first communication terminal apparatus A, receives the image information 120 captured by the camera 110 of the first communication terminal apparatus A, and displays the information on the display unit 130 of the second communication terminal apparatus B. To perform the processing operation according to the third embodiment, it is necessary to set in the second communication terminal apparatus B in advance such that a controlling process can be performed according to the third embodiment when a call connection using television telephones is completed through the operation unit 5 of the communication terminal apparatus B. The method of performing control during communicating using television telephones of the communication terminal apparatus according to the third embodiment of the present invention is explained below by referring to FIG. 8.

First, the first communication terminal apparatus A issues a call connection request using television telephones to the second communication terminal apparatus B. In the second communication terminal apparatus B, the control unit 12 answers the call connection request from the first communication terminal apparatus A (step S21) through the radio antenna 10 and the radio unit 11, and the control unit 12 determines whether or not the call connection between the first communication terminal apparatus A and the second communication terminal apparatus B using television telephones has been completed (step S22).

When the control unit 12 determines that a call connection between the first communication terminal apparatus A and the second communication terminal apparatus B has been completed using television telephones (YES in step S22), the control unit 12 transmits the image information 160 captured by the camera 140 of the second communication terminal apparatus B together with the audio information obtained from the microphone 17 to the first communication terminal apparatus A through the radio unit 11 and the radio antenna 10 as shown in FIG. 5 (step S23).

Thus, the first communication terminal apparatus A receives the image information 160 together with the audio information from the second communication terminal apparatus B, and displays the image information 160 on the display unit 100 of the first communication terminal apparatus A. when a call connection between the first communication terminal apparatus A and the second communication terminal apparatus B is completed using television telephones, the first communication terminal apparatus A transmits the image information 120 captured by the camera 110 of the first communication terminal apparatus A together with the audio information to the second communication terminal apparatus B. Therefore, the second communication terminal apparatus B receives the audio information together with the image information 120 from the first communication terminal apparatus A, and the control unit 12 of the second communication terminal apparatus B displays the image information 120 received from the first communication terminal apparatus A on the display unit 130 of the second communication terminal apparatus B, and outputs the audio information received from the first communication terminal apparatus A from the speaker 16 (step S24).

Thus, by switching to and setting the controlling method using television telephones as shown in FIG. 8 using the operation unit 5 of the second communication terminal apparatus B, when the a call connection between the first communication terminal apparatus A and the second communication terminal apparatus B is completed using television telephones, the second communication terminal apparatus B receives the image information 120 captured by the camera 110 of the first communication terminal apparatus A, displays the received image information 120 on the display unit 130 of the second communication terminal apparatus B, transmits the image information 160 captured by the camera 140 of the second communication terminal apparatus B to the first communication terminal apparatus A, and displays the image information 160 on the display unit 100 of the first communication terminal apparatus A.

By performing an optional operation to display the image information 160 captured by the camera 140 of the second communication terminal apparatus B on the display unit 130 using the operation unit 5 of the second communication terminal apparatus B (YES in step S25), the second communication terminal apparatus B transmits the substitute image information 150 to the first communication terminal apparatus A as shown in FIG. 3, and displays the image information 160 captured by the camera 140 of the second communication terminal apparatus B as a mirror image on the display unit 130 of the second communication terminal apparatus B by switching the control of the television telephones (step S26).

By performing an optional operation to transmit the substitute image information 150 using the operation unit 5 of the second communication terminal apparatus B to the communication partner terminal apparatus A (YES in step S27), the second communication terminal apparatus B transmits the substitute image information 150 to the first communication terminal apparatus A as shown in FIG. 6, and displays the image information 120 captured by the camera 110 of the first communication terminal apparatus A on the display unit 130 of the second communication terminal apparatus B by switching the control of the television telephones (step S28).

### (Fourth Embodiment)

Described below is the fourth embodiment of the present invention.

In the fourth embodiment, when a call connection between the first communication terminal apparatus A and the second communication terminal apparatus B is completed using television telephones, the second communication terminal apparatus B transmits the substitute image information 150 to the first communication terminal apparatus A as shown in FIG. 6, displays the substitute image information 150 on the display unit 100 of the first communication terminal apparatus A, receives the image information 120 captured by the camera 110 of the first communication terminal apparatus A, and displays the received image information 120 on the display unit 130 of the second communication terminal apparatus B. To perform the processing process according to the fourth embodiment, it is necessary to set in advance in the second communication terminal apparatus B such that the controlling process can be performed according to the fourth embodiment when a call connection is completed using television telephones through the operation unit 5 of the communication terminal apparatus B. The method of performing control using television telephones in the communication terminal apparatus according to the fourth embodiment of the present invention is explained below by referring to FIG. 9.

First, the first communication terminal apparatus A issues a call connection request using television telephones to the second communication terminal apparatus B. The second communication terminal apparatus B determines whether or not the control unit 12 of the second communication terminal apparatus B answers the call connection request from the first communication terminal apparatus A through the radio antenna 10 and the radio unit 11 (step S31), and the call connection using television telephones between the first communication terminal apparatus A and the second communication terminal apparatus B has been completed (step S32).

When the control unit 12 determines that the call connection using television telephones between the first communication terminal apparatus A and the second communication terminal apparatus B has been completed (YES in step S32), the control unit 12 reads from the ROM 15 the substitute image data and the presentation information (for indicating that the substitute image data is being displayed on the display unit of the communication partner terminal device) for presentation to a communication partner that the substitute image data is being transmitted, and the image processing unit 13 overlaps and combines the read image data with the presentation information to generate the substitute image information 150. Then, the control unit 12 transmits the generated substitute image information 150 to the first communication terminal apparatus A together with the audio information obtained from the microphone 17 through the radio antenna 10 and the radio unit 11 (step S33).

Thus, the first communication terminal apparatus A receives the substitute image information 150 together with the audio information from the second communication terminal apparatus B, and displays the substitute image information 150 on the display unit 100 of the first communication terminal apparatus A. The first communication terminal apparatus A transmits the image information 120 captured by the camera 110 of the first communication terminal apparatus A together with the audio information to the second communication terminal apparatus B when a call connection between the first communication terminal apparatus A and the second communication terminal apparatus B using television telephones is completed, and the second communication terminal apparatus B receives the audio information together with the image information 120 from the first communication terminal apparatus A, and the control unit 12 of the second communication terminal apparatus B displays the image information 120 received from the first communication terminal apparatus A on the display unit 130 of the second communication terminal apparatus B, and outputs the audio information received from the first communication terminal apparatus A through the speaker 16 (step S34).

As described above, using the operation unit 5 of the second communication terminal apparatus B, the method of performing control during communication using television telephones as shown in FIG. 9 is used, thereby allowing the second communication terminal apparatus B receives the image information 120 captured by the camera 110 of the first communication terminal apparatus A when a call connection is completed using television telephones between the first communication terminal apparatus A and the second communication terminal apparatus B, the received image information 120 is displayed on the display unit 130 of the second communication terminal apparatus B, and the substitute image information 150 generated by the second communication terminal apparatus B is transmitted to the first communication terminal apparatus A, and the substitute image information 150 can be displayed on the display unit 100 of the first communication terminal apparatus A.

By performing an optional operation to display the image information 160 captured by the camera 140 of the second communication terminal apparatus B on the display unit 130 using the operation unit 5 of the second communication terminal apparatus B (YES in step S35), the second communication terminal apparatus B transmits the substitute image information 150 to the first communication terminal apparatus A as shown in FIG. 3, and displays the image information 160 captured by the camera 140 of the second communication terminal apparatus B as a mirror image on the display unit 130 of the second communication terminal apparatus B by switching control of the television telephones (step S36).

Additionally, by performing an optional operation to transmit the image information 160 captured by the camera 140 of the second communication terminal apparatus B to the first communication terminal apparatus A of a communication partner using the operation unit 5 of the second communication terminal apparatus B (YES in step S37), the second communication terminal apparatus B transmits the image information 160 captured by the camera 140 of the second communication terminal apparatus B to the first communication terminal apparatus A as shown in FIG. 5, and displays the image information 120 captured by the camera 110 of the first communication terminal apparatus A on the display unit 130 of the second communication terminal apparatus B by switching control of the television telephones (step S38).

### (Fifth Embodiment)

Explained below is the fifth embodiment of the present invention.

In the first to fourth embodiments, the substitute image information 150 is generated according to the information stored in the ROM 15 shown in FIG. 2, and the substitute image information 150 is stored in the ROM 15 to transmit the information stored in the ROM 15 as the substitute image information 150 for protection of the privacy of a caller to the communication partner terminal apparatus A. However, according to the fifth embodiment, the substitute image information 150 is generated by performing image processing for protection of the privacy of a caller on the image information 160 captured by the camera 140 of the second communication terminal apparatus B, and the generated substitute image information 150 is transmitted to the communication partner terminal apparatus A.

Thus, by performing image processing for protection of the privacy of a caller on the image information 160 captured by the camera 140, generating the substitute image information 150, and transmitting the generated substitute image information 150 to the communication partner terminal apparatus A, a special effect can be generated on the display unit 100 of the communication partner terminal apparatus A, and communication using television telephones with amusing facilities can be performed.

The substitute image information 150 is generated by performing image processing by reducing the accuracy of the image information 160 captured by the camera 140, blurring the image information 160, darkening the information, etc. Furthermore, it can be generated by performing image processing such as reducing the accuracy of only a part (for example, a picture portion of the caller as a subject) of the image of the image information 160, blurring the image information 160, darkening it, etc. Additionally, the substitute image information 150 can be generated by converting a part of an image (for example, a picture portion of a caller as a subject) of the image information 160 to an image (for example, a picture of a caller as a subject) stored in the ROM 15 in advance, or the substitute image information 150 can be generated by superposing the image (for example, a picture of a caller as a subject) stored in advance in the ROM 15 on the image of a part (for example, a picture portion of a caller as a subject) of the image information 160.

In addition, an image of a picture portion of a caller of the image information 160 and a character (avatar) for conversion are stored in the ROM 15 in advance, a predetermined feature point (for example, the area of an eye, a nose, a mouth, an eyebrow, etc.) of the face of a caller as a subject is external device from the image information 160 captured by the camera 140, the moving state of the portions (for example, the area of an eye, a nose, a mouth, an eyebrow, etc.) configuring the face of a caller is monitored according to the position information about the extracted predetermined feature point, the expressions of the image of a picture portion of a caller of the image information 160 and the model data of the character (avatar) for conversion can be changed and displayed on the display unit 100 of the communication partner terminal apparatus A in association with the monitored moving state. Thus, although the image information 160 about the face image of a caller is not displayed on the display unit 100 of the communication partner terminal apparatus A, the feeling of the caller can be grasped according to the change of the expression of the character (avatar) displayed on the display unit 100, thereby performing the communication using television telephones with amusement facilities.

Described below is the method of controlling television telephones using the communication terminal apparatus according to the fifth embodiment. In the method of controlling television telephones using the communication terminal apparatus according to the fifth embodiment based on the first to fourth embodiments of the method of controlling television telephones using the communication terminal apparatus, the substitute image information 150 is generated by performing image processing for protection of the privacy of a caller on the image information 160 captured by the camera 140 of the second communication terminal apparatus B, and the generated substitute image information 150 is transmitted to the communication partner terminal apparatus A.

Therefore, in the method of controlling television telephones according to the fifth embodiment based on the first and second embodiments, when a call connection between the first communication terminal apparatus A and the second communication terminal apparatus B is established using television telephones, the second communication terminal apparatus B displays the image information 160 captured by the camera 140 of the second communication terminal apparatus B as a mirror image on the display unit 130 of the second communication terminal apparatus B, performs image processing for protection of the privacy of the caller on the image information 160 captured by the camera 140, generates the substitute image information 150, transmits the generated substitute image information 150 together with the audio information to the first communication terminal apparatus A, and displays the information on the display unit 100 of the first communication terminal apparatus A as shown in FIG. 3. By the caller performing an optional operation to display the image information 120 captured by the camera 110 of the communication partner terminal apparatus A on the display unit 130 of the terminal apparatus B of the caller using the operation unit 5 of second communication terminal apparatus B, the image processing for protection of the privacy of the caller is performed on the image information 160 captured by the camera 140 of the second communication terminal apparatus B, the substitute image information 150 is generated, the generated substitute image information 150 is transmitted to the first communication terminal apparatus A, and the image information 120 captured by the camera 110 of the first communication terminal apparatus A is displayed on the display unit 130 of the second communication terminal apparatus B by switching control of television telephones.

In the third embodiment, by the caller performing an optional operation to display the image information 160 captured by the camera 140 of the second communication terminal apparatus B on the display unit 130 using the operation unit 5 of second communication terminal apparatus B, the second communication terminal apparatus B displays the image information 160 captured by the camera 140 of the second communication terminal apparatus B as a mirror image on the display unit 130 of the second communication terminal apparatus B, performs image processing for protection of the privacy of the caller on the image information 160 captured by the camera 140, generates the substitute image information 150, transmits the generated substitute image information 150 to the first communication terminal apparatus A by switching control of television telephones as shown in FIG. 3. In addition, by the caller performing an optional operation to transmit the substitute image information 150 to the communication partner terminal apparatus A using the operation unit 5 of second communication terminal apparatus B, the image processing is performed to protect the privacy of the caller on the image information 160 captured by the camera 140 of the second communication terminal apparatus B, the substitute image information 150 is generated, the generated ROM substitute image information 150 is transmitted to the first communication terminal apparatus A, and the image information 120 captured by the camera 110 of the first communication terminal apparatus A can be displayed on the display unit 130 of the second communication terminal apparatus B by switching control of television telephones as shown in FIG. 6.

In the fourth embodiment, when a call connection is established between the first communication terminal apparatus A and the second communication terminal apparatus B using television telephones, the second communication terminal apparatus B performs image processing for protection of the privacy of a caller on the image information 160 captured by the camera 140 of the second communication terminal apparatus B, generates the substitute image information 150, transmits the generated substitute image information 150 to the first communication terminal apparatus A, and displays the image information 120 captured by the camera 110 of the first communication terminal apparatus A to the display unit 130 of the second communication terminal apparatus B as shown in FIG. 6. In addition, by the caller performing an optional operation for displaying the image information 160 captured by the camera 140 of the second communication terminal apparatus B using the operation unit 5 of second communication terminal apparatus B, the image information 160 captured by the camera 140 of the second communication terminal apparatus B is displayed as a mirror image on the display unit 130 of the second communication terminal apparatus B, the image processing is performed for protection of the privacy of the caller on the image information 160 captured by the camera 140, the 150 is generated, the generated substitute image information 150 is transmitted to the first communication terminal apparatus A by switching control of television telephones as shown in FIG. 3.

Thus, the communication terminal apparatus B according to the present embodiment captures the caller using the camera 140, transmits the captured image information 160 together with the audio information to the communication partner terminal apparatus A, receives the image information 120 and the audio information from the communication partner terminal apparatus A, displays the received image information 120 on the display unit 130 of the terminal apparatus B, and outputs the received audio information as voice as shown in FIG. 5. In the communication terminal apparatus B, when a call is established with the communication partner terminal apparatus A, the image information 160 captured by the camera 140 is displayed as a mirror image on the display unit 130 of the terminal apparatus B of the caller, the image processing is performed for protection of the privacy of the caller on the image information 160 captured by the camera 140, and the substitute image information 150 treated in the image processing is transmitted together with the audio information to the communication partner terminal apparatus A as shown in FIG. 3, thereby smoothly performing the communication with a communication partner with the privacy of the caller protected.

### (Sixth Embodiment)

Described below is the sixth embodiment of the present invention.

In the sixth embodiment, as shown in FIG. 10, the substitute image information 150 is generated according to the image information captured by a second camera 8 outside the communication terminal apparatus 1, and the generated substitute image information 150 is transmitted to the communication terminal of a communication partner.

For example, the substitute image information 150 can also be generated by combining the image information captured by the second camera 8 outside the communication terminal apparatus 1 with the substitute image data stored in the ROM 15. In this case, background information used when television telephones are used is captured by the second camera 8, the information about static images, moving pictures of the caller as substitute data stored in the ROM 15 is superposed on each other, and the substitute image information 150 similar to the image information 160 captured by the internal first camera 7 can also be generated.

Thus, the substitute image information 150 is generated by combining the image information captured by the second camera 8 outside the communication terminal apparatus 1 with the substitute image stored in the ROM 15, and the generated substitute image information 150 is transmitted to the communication partner terminal apparatus A, thereby generating a special effect on the display unit 100 of the communication partner terminal apparatus A and performing communication using television telephones with amusement facilities. The substitute image information 150 by combining the image information captured by the second camera 8 outside the communication terminal apparatus 1 with the image information captured by the first camera 7.

Described below is the method of controlling a television telephone in the communication terminal apparatus according to the sixth embodiment of the present invention. The method of controlling a television telephone in the communication terminal apparatus according to the sixth embodiment is based on the method of controlling a television telephone according to the first to fourth embodiments, the substitute image information 150 is generated according to the image information captured by the second camera 8 outside the communication terminal apparatus 1 shown in FIG. 10, and the generated substitute image information 150 can be transmitted to the communication terminal of the communication partner.

Therefore, the method of controlling television telephones according to the sixth embodiment of the present invention is based on the first and second embodiments. When a call connection is established between the first communication terminal apparatus A and the second communication terminal apparatus B using television telephones, the second communication terminal apparatus B displays the image information 160 captured by the first camera 140 of the second communication terminal apparatus B as a mirror image on the display unit 130 of the second communication terminal apparatus B, generates the substitute image information 150 for protection of the privacy of the caller according to the image information captured by the second camera (not shown in the attached drawings), transmits the generated substitute image information 150 together with the audio information to the first communication terminal apparatus A, and displays them on the display unit 100 of the first communication terminal apparatus A as shown in FIG. 3. By the caller performing an optional operation to display the image information 120 captured by the camera 110 of the first communication terminal apparatus A on the display unit 130 of the second communication terminal apparatus B using the operation unit 5 of second communication terminal apparatus B, the substitute image information 150 for protection of the privacy of the caller is generated according to the image information captured by the second camera of the second communication terminal apparatus B (not shown in the attached drawings), the generated substitute image information 150 is transmitted to the first communication terminal apparatus A, and the image information 120 captured by the camera 110 of the first communication terminal apparatus A is displayed on the display unit 130 of the second communication terminal apparatus B by switching control of television telephones as shown in FIG. 6.

In the third embodiment, by the caller performing an optional operation to display the image information 160 captured by the first camera 140 of the second communication terminal apparatus B on the display unit 130 using the operation unit 5 of second communication terminal apparatus B, the image information 160 captured by the first camera 140 of the second communication terminal apparatus B is displayed as a mirror image on the display unit 130 of the second communication terminal apparatus B, the substitute image information 150 for protection of the privacy of the caller is generated according to the image information captured by the second camera (not shown in the attached drawings), and the generated substitute image information 150 is transmitted to the first communication terminal apparatus A by switching control of television telephones as shown in FIG. 3. Additionally, by the caller performing an optional operation to transmit the substitute image information 150 to the first communication terminal apparatus A of the communication partner using the operation unit 5 of second communication terminal apparatus B, the substitute image information 150 for protection of the privacy of the caller is generated according to the image information captured by the second camera (not shown in the attached drawings) of the second communication terminal apparatus B, the generated substitute image information 150 is transmitted to the first communication terminal apparatus A, and the image information 120 captured by the camera 110 of the first communication terminal apparatus A is displayed on the display unit 130 of the second communication terminal apparatus B by switching control of television telephones as shown in FIG. 6.

In the fourth embodiment of the present invention, when a call connection between the first communication terminal apparatus A and the second communication terminal apparatus B is established using television telephones, the second communication terminal apparatus B generates the substitute image information 150 for protection of the privacy of the caller according to the image information captured by the second camera (not shown in the attached drawings) of the second communication terminal apparatus B, the generated substitute image information 150 is transmitted to the first communication terminal apparatus A, and the image information 120 captured by the camera 110 of the first communication terminal apparatus A is displayed on the display unit 130 of the second communication terminal apparatus B as shown in FIG. 6. In addition, by the caller performing an optional operation to display the image information 160 captured by the camera 140 of the second communication terminal apparatus B on the display unit 130 using the operation unit 5 of second communication terminal apparatus B, the image information 160 captured by the camera 140 of the second communication terminal apparatus B is displayed as a mirror image on the display unit 130 of the second communication terminal apparatus B, the substitute image information 150 for protection of the privacy of the caller is generated according to the image information captured by the second camera (not shown in the attached drawings), and the generated substitute image information 150 is transmitted to the first communication terminal apparatus A by switching control of the television telephones as shown in FIG. 3.

As described above, the communication terminal apparatus according to the present invention captures a caller by the first camera 140, transmits the captured image information 160 together with the audio information to the communication partner terminal apparatus B, receives the image information 120 and the audio information from the communication partner terminal apparatus B, and displays the received image information 120 on the display unit 130 of the terminal apparatus B as shown in FIG. 5. When a call is established with the communication partner terminal apparatus A, the communication terminal apparatus B which outputs the received audio information as voice displays the image information 160 captured by the camera 140 as a mirror image on the display unit 130 of the terminal apparatus B of the caller, the substitute image information 150 for protection of the privacy of the caller is generated using the captured image captured by the second camera (not shown in the attached drawings) for capturing anything other than the caller, and the generated substitute image information 150 is transmitted together with the audio information to the communication partner terminal apparatus A as shown in FIG. 3, thereby smoothly performing communication with a communication partner with the privacy of the caller protected.

### (Seventh Embodiment)

Described below is the seventh embodiment of the present invention.

The communication terminal apparatus according to the seventh embodiment is based on the above-mentioned first to sixth embodiments, and by displaying the image information 120 transmitted to the second communication terminal apparatus B of a communication partner as a part 101 of the display unit 100 of the first communication terminal apparatus A as shown in FIG. 11, the substitute image information 150 received from the second communication terminal apparatus B of the communication partner is browsed on the display unit 100 of the first communication terminal apparatus A, and the image information 120 transmitted to the second communication terminal apparatus B of the communication partner can be confirmed on a part 101 of the display unit 100 of the first communication terminal apparatus A. The second communication terminal apparatus B as well as the first communication terminal apparatus A displays the substitute image information 150 transmitted to the first communication terminal apparatus A of the communication partner, thereby confirming the image information 160 captured by the camera 140 of the second communication terminal apparatus B as a mirror image on the display unit 130 of the communication terminal apparatus B, and confirming the substitute image information 150 transmitted to the first communication terminal apparatus A of the communication partner on a part 131 on the display unit 130 of the second communication terminal apparatus B.

The communication terminal apparatus according to the seventh embodiment is based on the first to sixth embodiments, and by displaying the image information 120 transmitted to the second communication terminal apparatus B of the communication partner on a part 101 of the display unit 100 of the first communication terminal apparatus A, the image information 120 transmitted to the second communication terminal apparatus B of the communication partner can be confirmed on a part 101 of the display unit 100 of the first communication terminal apparatus A while browsing the image information 160 captured by the camera 140 of the second communication terminal apparatus B and received from the second communication terminal apparatus B of the communication partner on the display unit 100 of the first communication terminal apparatus A as shown in FIG. 12. The second communication terminal apparatus B as well as the first communication terminal apparatus A displays the image information 160 captured by the camera 140 of the second communication terminal apparatus B and transmitted to the first communication terminal apparatus A of the communication partner on a part 131 of the display unit 130 of the second communication terminal apparatus B, thereby confirming the image information 160 transmitted to the first communication terminal apparatus A of the communication partner on a part 131 of the display unit 130 of the second communication terminal apparatus B while browsing the image information 120 captured by the camera 110 of the first communication terminal apparatus A and received from the first communication terminal apparatus A of the communication partner on the display unit 130 of the second communication terminal apparatus B.

Additionally, the communication terminal apparatus according to the seventh embodiment is based on the above-mentioned first to sixth embodiments, and by displaying the image information 120 transmitted to the second communication terminal apparatus B of the communication partner on a part 101 of the display unit 100 of the first communication terminal apparatus A, the image information 120 transmitted to the second communication terminal apparatus B of the communication partner can be confirmed on a part 101 of the display unit 100 of the first communication terminal apparatus A while browsing the substitute image information 150 received from the second communication terminal apparatus B of the communication partner on the display unit 100 of the first communication terminal apparatus A as shown in FIG. 13. The second communication terminal apparatus B as well as the first communication terminal apparatus A displays the substitute image information 150 transmitted to the first communication terminal apparatus A of the communication partner on a part 131 of the display unit 130 of the second communication terminal apparatus B, thereby confirming the substitute image information 150 transmitted to the first communication terminal apparatus A of the communication partner on a part 131 of the display unit 130 of the second communication terminal apparatus B while browsing the image information 120 captured by the camera 110 of the first communication terminal apparatus A and received from the first communication terminal apparatus A of the communication partner on the display unit 130 of the second communication terminal apparatus B.

Thus, the communication terminal apparatus according to the seventh embodiment of the present invention displays image information transmitted to the communication terminal apparatus of a communication partner on a part of the display unit of the transmitting communication terminal apparatus, thereby possibly confirming the state of the image information transmitted to the communication terminal apparatus of the communication partner on the display unit of the transmitting communication terminal apparatus. Therefore, the transmitting communication terminal can easily confirm the state of the image information transmitted to the communication partner on the communication terminal of the communication partner.

The display style in which the image information is transmitted to the communication terminal apparatus of a communication partner on the display unit of the transmitting communication terminal apparatus is not limited so far as the state of the image information transmitted to the communication terminal apparatus of the communication partner can be confirmed on the display unit of the transmitting communication terminal apparatus.

For example, the screen on the display unit can be divided, and the image information transmitted to the communication terminal apparatus of a communication partner can be described on the divided display area. The screen can be divided into upper and lower portions, or right and left portions. The dividing line can be a straight line or a curve, and is not specifically restricted. The image information can be transformed and displayed based on a display area such that the image information transmitted to the communication terminal apparatus of a communication partner can be entirely displayed on the divided display area. In this case, the aspect ratio of image information and the vertical and horizontal compression rate can be changed. In addition, the image information transmitted to the communication terminal apparatus of a communication partner can be superposed on a part of the picture displayed on the display unit of the transmitting communication terminal apparatus.

In FIGS. 11, 12, and 13, the image information transmitted to the communication terminal apparatus of a communication partner is displayed on a part of the display unit of a transmitting communication terminal apparatus, but it is also possible to exchange and display, or switch and display the image information displayed on a display unit and the image information displayed on a part of the display unit. Furthermore, the image information 160 captured by the camera 140 of the second communication terminal apparatus B can be displayed as a mirror image on the display unit 130 of the second communication terminal apparatus B, and when the image 160 of the caller is confirmed, the information 132 that the image 160 of the caller is being confirmed can be displayed on a part of the display unit 130 of the second communication terminal apparatus B. Thus, it can be easily identified whether or not the image 160 of the caller displayed on the display unit 130 of the second communication terminal apparatus B is an image transmitted to the first communication terminal apparatus A of a communication partner or an image for confirmation by a caller. An example of indicating that the image 160 of the caller is being confirmed can be an icon, etc.

The above-mentioned embodiments are preferable embodiments of the present invention, and the present invention is not limited to the above-mentioned embodiments, but an embodiment of making various changed in the scope of the gist of the present invention. For example, a processing operation performed when television telephones are used between the communication terminal apparatuses A and B according to the above-mentioned embodiments can be performed when a call is established by television telephones regardless of the time when a television telephone issues a call request, when an answer to a television telephone call request is issued, etc.

Although a processing operation performed using television telephones according to the above-mentioned embodiments is automatically performed in a controlling process predetermined in the communication terminal apparatus in advance when a call request using television telephones is issued or when the call request is answered, the controlling process using television telephones according to the above-mentioned embodiments can also be performed in a predetermined operation from the operation unit of the communication terminal apparatus when a call request using television telephones is answered. In this case, the controlling process using television telephones according to the present embodiment is automatically performed or the controlling process is performed in a predetermined operation from the operation unit by optionally setting the operation unit of the communication terminal apparatus.

If the identification information about the communication terminal apparatus of a communication partner for automatically performing the controlling process using television telephones according to the present embodiment is predetermined in a terminal device when a television telephone call request is answered, and the a call request using television telephones is issued by the set communication terminal apparatus, it is also possible to automatically perform the controlling process using television telephones according to the above-mentioned embodiments. Thus, when a call request using television telephones is issued from a specific communication partner, it is possible to give an answer by optionally setting a normal controlling process using television telephones, a controlling process for protection of the privacy, or a controlling process using television telephones depending on the terminal device of a communication partner.

Furthermore, the controlling process using television telephones according to the above-mentioned present embodiment relates to the processing operation between the communication terminal apparatuses A and B, but the present embodiment can be applied to three-party communication, and the number of communication terminal apparatuses that can be connected using television telephone is not specifically restricted.

It is also possible to perform the controlling process between the communication terminal apparatuses A and B according to the above-mentioned embodiments by a computer program incorporated into the communication terminal apparatuses A and B. For example, the program can be recorded on a recording medium such as an optical recording medium, a magnetic recording medium, a magneto optical recording medium, a semiconductor, etc. and read from the medium recording the program to a communication terminal apparatus, thereby performing the processing operation according to the present embodiment. Furthermore, by downloading the program from external connection equipment connected over a predetermined network to the communication terminal apparatus, the processing operation by the communication terminal apparatus according to the present embodiment can be performed.

The communication terminal apparatus, the television telephone control method, and the television telephone control program according to the present invention can be applied if a television function is loaded and a communication device can bidirectionally receive and transmit audio and video data. For example, it can be applied to a communication terminal apparatus such as an information processing device including a mobile telephone, a PHS, a PDA, a notebook PC, etc.

## Claims

1. A communication terminal apparatus having: a capture means for capturing a caller; means for transmitting a captured image together with audio information to a terminal device of a communication partner; and means for receiving a captured image and audio information from the terminal device of the communication partner, displaying the received captured image on a display unit, and outputting the received audio information as voice, comprising:
storage means for storing a predetermined image information; and
first control means for displaying the captured image captured by the capture means as a mirror image on the display unit when a call to the terminal device of the communication partner is established, outputting the audio information received from the terminal device of the communication partner as voice, and transmitting the image information stored in the storage means together with the audio information to the terminal device of the communication partner.

2. The communication terminal apparatus according to claim 1, further comprising
second control means for displaying on the display unit the captured image received from the terminal device of the communication partner instead of the captured image captured by the capture means, outputting the audio information received from the terminal device of the communication partner as voice, and transmitting the captured image captured by the capture means together with audio information to the terminal device of the communication partner.

3. The communication terminal apparatus according to claim 1 or 2, further comprising
third control means for displaying on the display unit the captured image received from the terminal device of the communication partner instead of the captured image captured by the capture means, outputting the audio information received from the terminal device of the communication partner as voice, and transmitting the image information stored in the storage means together with audio information to the terminal device of the communication partner.

4. A communication terminal apparatus having: a capture means for capturing a caller; means for transmitting a captured image together with audio information to a terminal device of a communication partner; and means for receiving a captured image and audio information from the terminal device of the communication partner, displaying the received captured image on a display unit, and outputting the received audio information as voice, comprising:
first control means for displaying the captured image captured by the capture means as a mirror image on the display unit when a call to the terminal device of the communication partner is established, performing image processing for protection of privacy of a caller on the captured image captured by the capture means, and transmitting the captured image treated by the image processing together with audio information to the terminal device of the communication partner.

5. The communication terminal apparatus according to claim 4, further comprising
second control means for displaying on the display unit the captured image received from the terminal device of the communication partner instead of the captured image captured by the capture means, and transmitting the captured image captured by the capture means to the terminal device of the communication partner.

6. The communication terminal apparatus according to claim 4 or 5, further comprising
third control means for displaying on the display unit the captured image received from the terminal device of the communication partner instead of the captured image captured by the capture means, performing image processing for protection of privacy of a caller on the captured image captured by the capture means, and transmitting the captured image treated by the image processing together with audio information to the terminal device of the communication partner.

7. A communication terminal apparatus having: first capture means for capturing a caller; means for transmitting a captured image together with audio information to a terminal device of a communication partner; and means for receiving a captured image and audio information from the terminal device of the communication partner, displaying the received captured image on a display unit, and outputting the received audio information as voice, comprising:
second capture means for capturing what is other than a caller; and
first control means for displaying the captured image captured by the first capture means as a mirror image on the display unit when a call to the terminal device of the communication partner is established, forming an image for protection of privacy of a caller using the captured image captured by second capture means, and transmitting the formed image together with audio information to the terminal device of the communication partner.

8. The communication terminal apparatus according to claim 7, further comprising
second control means for displaying on the display unit the captured image received from the terminal device of the communication partner instead of the captured image captured by the first capture means, and transmitting the captured image captured by the first capture means to the terminal device of the communication partner.

9. The communication terminal apparatus according to claim 7 or 8, further comprising
third control means for displaying on the display unit the captured image received from the terminal device of the communication partner instead of the captured image captured by the first capture means, forming an image for protection of privacy of a caller using the captured image captured by the second capture means, and transmitting the formed image together with audio information to the terminal device of the communication partner.

10. The communication terminal apparatus according to claim 3, 6, or 9 further comprising
switch means for making a switch to operate one of the first control means, the second control means, and the third control means.

11. The communication terminal apparatus according to claim 10, wherein
the switch means makes a switch to operate one of the first control means, the second control means, and the third control means when a call to the terminal device of the communication partner is established.

12. The communication terminal apparatus according to claim 10, wherein
the switch means makes a switch to operate one of the first control means, the second control means and the third control means by an optional operation from an operation unit of the communication terminal apparatus after a call to the terminal device of the communication partner is established and one of the first control means, the second control means, and the third control means is operated.

13. The communication terminal apparatus according to claim 2, 3, 5, 6, 8, 9, 10, 11, or 12 further comprising
automatic switch means for automatically making a switch to operate the second control means when it is determined that a predetermined time has passed after a call to the terminal device of the communication partner is established and the first control means is operated.

14. The communication terminal apparatus according to any one of claims 1 to 13, wherein:
image information stored in the storage means is substitute image data as a substitute for a caller and presentation information indicating that the substitute image data is transmitted; and
the first control means reads the substitute image data and the presentation information stored in the storage means, overlaps and composes the read substitute image data and presentation information, and transmits the composed composite image information.

15. The communication terminal apparatus according to any one of claims 1 to 13, wherein:
the image information stored in the storage means is composite image information obtained by overlapping and composing substitute image data as a substitute for a caller and presentation information indicating that the substitute image data is transmitted; and
the first control means reads the composite image information stored in the storage means, and transmits the read composite image information.

16. The communication terminal apparatus according to any one of claims 1 to 15, further comprising
display means for displaying an image to be transmitted to a terminal of the communication partner on a part of the display unit.

17. A television telephone control method used by a communication terminal apparatus performing a step of capturing a caller using capture device and transmitting a captured image together with audio information to a terminal device of a communication partner, and a step of receiving a captured image and audio information from the terminal device of the communication partner, displaying the received captured image on a display unit, and outputting the received audio information as voice, wherein
the communication terminal apparatus performs a first control step of displaying the captured image captured by the capture means as a mirror image on the display unit when a call to the terminal device of the communication partner is established, outputting the audio information received from the terminal device of the communication partner as voice, and transmitting the image information stored in a storage unit of the communication terminal apparatus together with the audio information to the terminal device of the communication partner.

18. The television telephone control method according to claim 17, wherein
the communication terminal apparatus performs a second control step of displaying on the display unit the captured image received from the terminal device of the communication partner instead of the captured image captured by the capture device, outputting the audio information received from the terminal device of the communication partner as voice, and transmitting the captured image captured by the capture means together with audio information to the terminal device of the communication partner.

19. The television telephone control method according to claim 17 or 18, wherein
the communication terminal apparatus performs a third control step of displaying on the display unit the captured image received from the terminal device of the communication partner instead of the captured image captured by the capture means, outputting the audio information received from the terminal device of the communication partner as voice, and transmitting the image information stored in a storage unit of the communication terminal apparatus together with audio information to the terminal device of the communication partner.

20. A television telephone control method used by a communication terminal apparatus performing a step of capturing a caller using capture device and transmitting a captured image together with audio information to a terminal device of a communication partner, and a step of receiving a captured image and audio information from the terminal device of the communication partner, displaying the received' captured image on a display unit, and outputting the received audio information as voice, wherein:
the communication terminal apparatus performs a first control step of displaying the captured image captured by the capture device as a mirror image on the display unit when a call to the terminal device of the communication partner is established, performing image processing for protection of privacy of a caller on the captured image captured by the capture means, and transmitting the captured image treated by the image processing together with audio information to the terminal device of the communication partner.

21. The television telephone control method according to claim 20, wherein
the communication terminal apparatus performs a second control step of displaying on the display unit the captured image received from the terminal device of the communication partner instead of the captured image captured by the capture device, and transmitting the captured image captured by the capture device to the terminal device of the communication partner.

22. The television telephone control method according to claim 20 or 21, wherein
the communication terminal apparatus performs a third control step of displaying on the display unit the captured image received from the terminal device of the communication partner instead of the captured image captured by the capture device, performing image processing for protection of privacy of a caller on the captured image captured by the capture device, and transmitting the captured image treated by the image processing together with audio information to the terminal device of the communication partner.

23. A television telephone control method used by a communication terminal apparatus performing a step of capturing a caller using first capture device and transmitting a captured image together with audio information to a terminal device of a communication partner, and a step of receiving a captured image and audio information from the terminal device of the communication partner, displaying the received captured image on a display unit, and outputting the received audio information as voice, wherein:
the communication terminal apparatus performs a first control step of displaying the captured image captured by the first capture device as a mirror image on the display unit when a call to the terminal device of the communication partner is established, forming an image for protection of privacy of a caller using the captured image captured by second capture device for capturing what is other than a caller, and transmitting the formed image together with audio information to the terminal device of the communication partner.

24. The television telephone control method according to claim 23, wherein
the communication terminal apparatus performs a second control step of displaying on the display unit the captured image received from the terminal device of the communication partner instead of the captured image captured by the first capture device, and transmitting the captured image captured by the first capture device to the terminal device of the communication partner.

25. The television telephone control method according to claim 23 or 24, wherein
the communication terminal apparatus performs a third control step of displaying on the display unit the captured image received from the terminal device of the communication partner instead of the captured image captured by the first capture device, forming an image for protection of privacy of a caller using the captured image captured by the second capture device, and transmitting the formed image together with audio information to the terminal device of the communication partner.

26. The television telephone control method according to claim 19, 22, or 25, wherein
the communication terminal apparatus performs a switch step of making a switch to perform one of the first control step, the second control step, and the third control step.

27. The television telephone control method according to claim 26, wherein
the switch step makes a switch to allow the communication terminal apparatus to perform one of the first control step, the second control step, and the third control step when a call to the terminal device of the communication partner is established.

28. The television telephone control method according to claim 26, wherein
the switch means makes a switch to allow the communication terminal apparatus to perform one of the first control step, the second control step and the third control step by an optional operation from an operation unit of the communication terminal apparatus after a call to the terminal device of the communication partner is established and one of the first control step, the second control step, and the third control step is performed.

29. The television telephone control method according to claim 18, 19, 21, 22, 24, 25, 26, 27, or 28, wherein
the communication terminal apparatus performs an automatic switch step of automatically making a switch to perform the second control step when it is determined that a predetermined time has passed after a call to the terminal device of the communication partner is established and the first control step is performed.

30. The television telephone control method according to any one of claims 17 to 29, wherein:
image information stored in the storage unit is substitute image data as a substitute for a caller and presentation information indicating that the substitute image data is transmitted; and
the first control step reads the substitute image data and the presentation information stored in the storage unit, overlaps and composes the read substitute image data and presentation information, and transmits the composed composite image information.

31. The television telephone control method according to any one of claims 17 to 29, wherein:
the image information stored in the storage unit is composite image information obtained by overlapping and composing substitute image data as a substitute for a caller and presentation information indicating that the substitute image data is transmitted; and
the first control step reads the composite image information stored in the storage means, and transmits the read composite image information.

32. The television telephone control method according to any one of claims 17 to 31, wherein
the communication terminal apparatus performs a display step of displaying an image to be transmitted to a terminal of the communication partner on a part of the display unit.

33. A television telephone control program used to direct a communication terminal apparatus to perform a process of capturing a caller using capture device and transmitting a captured image together with audio information to a terminal device of a communication partner, and a process of receiving a captured image and audio information from the terminal device of the communication partner, displaying the received captured image on a display unit, and outputting the received audio information as voice, wherein
the communication terminal apparatus performs a first control step of displaying the captured image captured by the capture device as a mirror image on the display unit when a call to the terminal device of the communication partner is established, outputting the audio information received from the terminal device of the communication partner as voice, and transmitting the image information stored in a storage unit of the communication terminal apparatus together with the audio information to the terminal device of the communication partner.

34. The television telephone control program according to claim 33, wherein
the communication terminal apparatus performs a second control process of displaying on the display unit the captured image received from the terminal device of the communication partner instead of the captured image captured by the capture device, outputting the audio information received from the terminal device of the communication partner as voice, and transmitting the captured image captured by the capture device together with audio information to the terminal device of the communication partner.

35. The television telephone control program according to claim 33 or 34, wherein
the communication terminal apparatus performs a third control process of displaying on the display unit the captured image received from the terminal device of the communication partner instead of the captured image captured by the capture device, outputting the audio information received from the terminal device of the communication partner as voice, and transmitting the image information stored in a storage unit of the communication terminal apparatus together with audio information to the terminal device of the communication partner.

36. A television telephone control program used to direct a communication terminal apparatus to perform a process of capturing a caller using capture device and transmitting a captured image together with audio information to a terminal device of a communication partner, and a process of receiving a captured image and audio information from the terminal device of the communication partner, displaying the received captured image on a display unit, and outputting the received audio information as voice, wherein:
the communication terminal apparatus performs a first control process of displaying the captured image captured by the capture device as a mirror image on the display unit when a call to the terminal device of the communication partner is established, performing image processing for protection of privacy of a caller on the captured image captured by the capture device, and transmitting the captured image treated by the image processing together with audio information to the terminal device of the communication partner.

37. The television telephone control program according to claim 36, wherein
the communication terminal apparatus performs a second control process of displaying on the display unit the captured image received from the terminal device of the communication partner instead of the captured image captured by the capture device, and transmitting the captured image captured by the capture device to the terminal device of the communication partner.

38. The television telephone control program according to claim 36 or 37, wherein
the communication terminal apparatus performs a third control step of displaying on the display unit the captured image received from the terminal device of the communication partner instead of the captured image captured by the capture device, performing image processing for protection of privacy of a caller on the captured image captured by the capture device, and transmitting the captured image treated by the image processing together with audio information to the terminal device of the communication partner.

39. A television telephone control program used to direct a communication terminal apparatus to perform a process of capturing a caller using first capture device and transmitting a captured image together with audio information to a terminal device of a communication partner, and a process of receiving a captured image and audio information from the terminal device of the communication partner, displaying the received captured image on a display unit, and outputting the received audio information as voice, wherein:
the communication terminal apparatus performs a first control process of displaying the captured image captured by the first capture device as a mirror image on the display unit when a call to the terminal device of the communication partner is established, forming an image for protection of privacy of a caller using the captured image captured by second capture device for capturing what is other than a caller, and transmitting the formed image together with audio information to the terminal device of the communication partner.

40. The television telephone control program according to claim 39, wherein
the communication terminal apparatus performs a second control process of displaying on the display unit the captured image received from the terminal device of the communication partner instead of the captured image captured by the first capture device, and transmitting the captured image captured by the first capture device to the terminal device of the communication partner.

41. The television telephone control program according to claim 39 or 40, wherein
the communication terminal apparatus performs a third control step of displaying on the display unit the captured image received from the terminal device of the communication partner instead of the captured image captured by the first capture device, forming an image for protection of privacy of a caller using the captured image captured by the second capture device, and transmitting the formed image together with audio information to the terminal device of the communication partner.

42. The television telephone control program according to claim 35, 38, or 41, wherein
the communication terminal apparatus performs a switch process of making a switch to perform one of the first control process, the second control process, and the third control process.

43. The television telephone control program according to claim 42, wherein
the switch process makes a switch to allow the communication terminal apparatus to perform one of the first control process, the second control process, and the third control process when a call to the terminal device of the communication partner is established.

44. The television telephone control program according to claim 42, wherein
the switch process makes a switch to allow the communication terminal apparatus to perform one of the first control process, the second control process and the third control process by an optional operation from an operation unit of the communication terminal apparatus after a call to the terminal device of the communication partner is established and one of the first control process, the second control process, and the third control process is performed.

45. The television telephone control program according to claim 34, 35, 37, 38, 40, 41, 42, 43, or 44, wherein
the communication terminal apparatus performs an automatic switch process of automatically making a switch to perform the second control process when it is determined that a predetermined time has passed after a call to the terminal device of the communication partner is established and the first control process is performed.

46. The television telephone control program according to any one of claims 33 to 45, wherein:
image information stored in the storage unit is substitute image data as a substitute for a caller and presentation information indicating that the substitute image data is transmitted; and
the first control process reads the substitute image data and the presentation information stored in the storage unit, overlaps and composes the read substitute image data and presentation information, and transmits the combined composite image information.

47. The television telephone control program according to any one of claims 33 to 45, wherein:
the image information stored in the storage unit is composite image information obtained by overlapping and composing substitute image data as a substitute for a caller and presentation information indicating that the substitute image data is transmitted; and
the first control process reads the composite image information stored in the storage means, and transmits the read composite image information.

48. The television telephone control program according to any one of claims 33 to 47, wherein
the communication terminal apparatus performs a display process of displaying an image to be transmitted to a terminal of the communication partner on a part of the display unit.
